# EUROPEAN PATENT APPLICATION

(11) **EP 4 086 693 A1**
(43) Date of publication of application: **09.11.2022**
(21) Application number: 21172763.1
(22) Date of filing: 07.05.2021
(51) Int. Cl.: G02C 7/02, G02C 13/00

(54) **METHOD, PROCESSING DEVICE AND SYSTEM FOR DETERMINING AT LEAST ONE CENTRATION PARAMETER FOR ALIGNING SPECTACLE LENSES IN A SPECTACLE FRAME TO EYES OF A WEARER**

(71) Applicant: Carl Zeiss Vision International GmbH, 73430 Aalen (DE)
(72) Inventor: Schwarz, Oliver, 73479 Ellwangen (DE)
(74) Representative: Altmann Stößel Dick Patentanwälte PartG mbB

(57) **Abstract**

The present invention relates to a computer-implemented method (114), a computer program, a processing device (190) and a system (118) for determining at least one centration parameter (116) for aligning at least one spectacle lens (112) in a spectacle frame (128) to at least one eye of a wearer (126) as well as a method (110) for producing the at least one spectacle lens (110). The computer-implemented method (114) comprises the following steps:
a) generating a three-dimensional model (146) related to the wearer (126) comprising
∘ at least one spatial location of at least one reference point at the at least one eye (149) of the wearer (126),
∘ at least one spatial direction vector specifying at least one line of sight (150) of the at least one eye (149) of the wearer (126), and
∘ a relationship between the at least one spatial location of at least one reference point at the at least one eye (149) of the wearer (126) and spatial locations of at least three characteristic defining features at the spectacle frame (128);

b) determining the at least one centration parameter (116) by adjusting at least one lens design parameter of the at least one spectacle lens (112) in the spectacle frame (128) to the three-dimensional model (146) related to the wearer (126); and
c) automatically modifying the three-dimensional model (146) related to the wearer (126) to assume a habitual head posture (156) of the wearer (126) prior to determining the at least one centration parameter (116).

## Description

### Field of the invention

The present invention relates to a computer-implemented method, a computer program, a processing device and a system for determining at least one centration parameter for aligning at least one spectacle lens in a spectacle frame to at least one eye of a wearer as well as a method for producing the at least one spectacle lens by using the at least one centration parameter as determined by the above-mentioned computer-implemented method.

### Related art

Methods, computer programs, processing devices and systems for determining at least one centration parameter for aligning at least one spectacle lens in a spectacle frame to at least one eye of a wearer as well as methods for producing at least one spectacle lens by using the at least one centration parameter as determined by the above-mentioned method are known. For determining the at least one centration parameter, a scanning procedure may, usually, be performed, during which a recording system may record at least two images under different angles and/or at least one three-dimensional scan of at least a forehead portion of the wearer, wherein the wearer is wearing the spectacle frame in an as-worn position. Alternatively or in addition, the at least one three-dimensional scan of at least the forehead portion of the wearer can be used for generating an avatar of the wearer, wherein the avatar of the wearer may, subsequently, wear a virtual copy of the spectacle frame in the as-worn position.

For aligning the at least one spectacle lens in the spectacle frame to the at least one eye of the wearer, the wearer, usually assumes a line of sight of the eye in the primary direction. At the primary direction, the view of the wearer is directed to a defined point at a large distance being provided by using a fixation target, in particular a laser target. In practice, however, many wearers do not adopt a natural habitus, i.e. a natural habitual head and body posture, during the scanning procedure. Rather, the actual habitus as assumed by the wearer can be a consequence of an unfamiliar situation during the scanning procedure or due to psychological stress. An operator of the recording system or an optician may, typically, observe the actual habitus as assumed by the wearer and may point out to the wearer to adopt the natural habitus during the scanning procedure. However, many wearers do still not assume the natural habitus as requested. As a result, erroneous results for at least one centration parameter can be determined, and the avatar of the user may be displayed showing an unfavorable head posture.

In order to determine the at least one centration parameter, nevertheless, in a manner which takes into account the head posture of the wearer it is required to modify the head posture as determined from the at least two images under different angles and/or the at least one three-dimensional scan to assume the habitual head posture of the wearer. For this purpose, the operator of the recording system or the optician, usually, modifies the at least one centration parameter and the representation of the head of the wearer in the avatar in a manual fashion, in particular by adjusting an angular orientation of the head of the wearer in an intuitive manner, particularly based on experience of the optician over a long period of time.

DE 10 2006 033 491 A1 discloses an apparatus for determining a position of at least one spectacle lens relative to a pupil center of a corresponding eye of a user in a zero viewing direction, comprising at least two image recording devices configured to generate comparative image data of at least a portion of the head of the user in absence of the at least one spectacle lens and at least a portion of an auxiliary structure, and image data of a substantially identical partial region of the head of the user with the at least one spectacle lens and at least the portion of the auxiliary structure; a data processing unit configured to determine, on the basis of the image data, the comparison image data and at least the portion of the auxiliary structure, the position of the at least one spectacle lens relative to the pupil center of the corresponding eye of the user in the zero viewing direction, and a data output unit adapted to output the position of the at least one spectacle lens relative to the pupil center of the corresponding eye of the user in the zero viewing direction.

DE 10 2008 018 198 A1 discloses, during a sequence of vision calibration, measuring an angle of tilt for a user's head and recording a number of values for this angle of tilt. A zero-view head tilt is determined from the recorded values for this angle of head tilt. Main direction of vision is calculated for distance by using a user's/wearer's detected zero-vision head tilt and head size. With the help of a video centering device, the position of a wearer's eyes is measured in relation to spectacle frames when the wearer's zero-vision head tilt has been adjusted in advance. Further disclosed is a device for preparing a user-dependent adjustment to spectacle frames.

EP 3 422 087 A1 discloses methods and devices for correcting centration parameters and/or an axial position of a spherocylindrical refraction based on a habitual head posture are provided. Thereby, a representation of the head is shown on a display, whereby an adjustment of a habitual head posture is intuitively possible.

EP 3 425 446 A1 discloses a method for virtual eyeglass fitting as well as a corresponding computer program and computing device. Herein, first measurement points are defined on a 3D model of a person's head, and a model of an eyeglass frame is fitted based on the first measurement points. Accordingly, defining the first measurement points comprises defining second measurement points on a parametric head model, fitting the parametric head model to the 3D model of the person's head, and determining the first measurement points based on the second measurement points and the fitting. Herein, the second measurement points only need to be defined once on the parametric head model in order to be able to define the first measurement points for a variety of different 3D models of different heads.

EP 3 354 190 A1 discloses a computer-implemented method for detecting a corneal vertex, wherein a front image of a head and a side image of the head are provided, which are calibrated with respect to each other, wherein the position of the corneal vertex in space is determined from the front image and the side image by means of geometric position determination.

US 10,001,663 B2 discloses a method of determining at least one visual behavior parameter of an individual, including: determination of the position of the center of rotation of at least one eye of the individual in a first reference frame tied to the head of the individual; capture, with the aid of an image capture device, of at least one image of at least one part of the body of the individual in a second reference frame, determination of the position and the orientation, in the second reference frame, of the first reference frame tied to the head of the individual, by searching for the position, in the second reference frame of a distinctive zone of the part of the body of the individual; determination of the position of the center of rotation of the eye in the second reference frame; and determination of the sought-after visual behavior parameter.

Hsung, T.-C., Lo, J., Li, T.-S. and Cheung, L.-K., Recording of Natural Head Position Using Stereophotogrammetry: A New Technique and Reliability Study, J. Oral Maxillofac. Surg. 2014, 72, pp. 2256-2261, present a study to develop a technique to record physical references and orient digital mesh models to natural head position using stereo-photogrammetry. The first step was to record the digital mesh model of a hanging reference board placed at the capturing position of the stereo-photogrammetry machine. The board was aligned to the true vertical using a plumb bob. It was also aligned with laser plane parallel to the hanging mirror which was located at the center of the machine. Parameter derived from the digital mesh model of the board was then used to adjust the roll, pitch and yaw of the subsequent captures of subjects. This information was valid until the next machine calibration.

Zhu, S., Keeling, A., Hsung, T.-C. Yang, Y., Khambay, B., The difference between registered natural head position and estimated natural head position in three dimensions, Int. J. Oral Maxillofac. Surg. 47 (2), 2018, pp. 276-282, present a study for determining the intra-rater repeatability and inter-rater reproducibility of re-orientating three-dimensional (3D) facial images into estimated natural head position. 3D facial images of 15 pre-surgical Class III orthognathic patients were obtained and automatically reoriented into natural head position (RNHP) using a 3D stereo-photogrammetry system and in-house software. 6 clinicians were asked to estimate the natural head position of these patients (ENHP); they re-estimated 5 randomly selected 3D images after a 2-week interval. The differences in yaw, roll, pitch and chin position between RNHP and ENHP were measured. For intra-rater repeatability the intra-class coefficient (ICC) values ranged from 0.55 to 0.74 representing moderate reliability for roll, yaw, pitch and chin position, whilst for interrater reproducibility ICC values from 0.39 to 0.58 indicated poor to moderate reliability. There was a tendency for the clinicians to estimate NHP with the chin tipped more posteriorly (6.3 ± 5.2 mm) compared to RNHP; reducing the severity of the skeletal deformity in the anterior-posterior direction.

Choi, M.-H., Lee, S.-J., Yang, H.J. Huh, K.-H., Lee, S.-S., Heo, M.-S., Choi, S.-C., Hwang, S.-J., and Yi, W.-J., Automatic Reproduction of Natural Head Position Using a Portable 3D Scanner Based on Immediate Calibration, Appl. Sci. 2020, 10, 174, present a method to easily record and automatically reproduce the 3D natural head position (NHP) of patients using a portable 3D scanner based on immediate calibration. First, they optically scanned the patient's face using a portable 3D scanner, and the scanned model was easily aligned with the global horizon based on an immediate calibration procedure using a developed calibration plate. The 3D patient NHP Computed Tomography (CT) model was reproduced automatically by performing registration between the CT model and the optically scanned model in the NHP using a modified coherent point drift (CPD) algorithm. In a phantom experiment, they evaluated the developed method's accuracy using the error between the true and the calculated orientations in roll, pitch, and yaw directions. The mean difference was -0.05 ± 0.13°, 0.08 ± 0.22°, and -0.05 ± 0.18° in the roll, pitch, and yaw directions, respectively. The measured roll, pitch, and yaw directions were not significantly different from the true directions (p > 0.05). The calibration procedure for aligning the scanner coordinate system was easy enough for an inexperienced user to operate, and the 3D NHP CT model could be reproduced automatically.

Zeiss Manual EN_20_070_0022I v. 1.0 VISUFIT 1000, pages 24-25, describes how to adjust an unnatural head-body posture of a customer in centration data determination. For this purpose, an observed head posture is configured by rotating endpoints of an angle cross, wherein it can be switched between a right view and left view by clicking on a key displayed on a screen. Finally, the selected head posture is confirmed by pressing a further key.

WO 2020/178167 A1 discloses a data record, stored on a storage medium, for use in a method for producing a spectacle lens, a method and a computer program for generating the data record, and a method for producing a spectacle lens. The data record comprises at least the following data values: spatial coordinates of a reference point on each eye of the wearer; at least one spatial direction vector for specifying at least one line of sight of the wearer through the spectacle lens; and a spatial frame rim curve or rim curve.

### Problem to be solved

In particular based on the disclosure of any one of EN_20_070_0022I v. 1.0 VISUFIT 1000, pages 24-25 or WO 2020/178167 A1 it is therefore an objective of the present invention to provide a computer-implemented method, a computer program, a processing device and a system for determining at least one centration parameter for aligning at least one spectacle lens in a spectacle frame to at least one eye of a wearer as well as a method for producing at least one spectacle lens, which at least partially overcome the above-mentioned problems of the state of the art.

It is a particular objective of the present invention to provide a method which would allow adjusting the actual head posture as assumed by the wearer during the scanning procedure to the natural habitual procedure head posture of the wearer without user intervention. In particular, it would be desirable to be able to determine the at least one centration parameter in a separate fashion at a time and/or a location which could differ from the time and location of the scanning procedure, thus, being able to offer a virtual selection, fitting, and centration of the at least one spectacle lens even in an event in which the wearer has already left the shop of the optician.

In addition, it would be desirably if the method could enable an improved representation of the head of the wearer in the avatar in the natural head position, thereby ensuring that the natural habitual head position of the wearer is used for selecting a spectacle frame, such as when choosing an inclination of a spectacle frame with respect to the head of the wearer.

### Summary of the invention

This problem is solved by a computer-implemented method, a computer program, a processing device and a system for determining at least one centration parameter for aligning at least one spectacle lens in a spectacle frame to at least one eye of a wearer as well as a method for producing at least one spectacle lens with the features of the independent claims. Preferred embodiments, which might be implemented in an isolated fashion or in any arbitrary combination, are listed in the dependent claims or throughout the specification.

In a first aspect, the present invention relates to a computer-implemented method for determining at least one centration parameter for aligning at least one spectacle lens in a spectacle frame to at least one eye of a wearer. In general, each spectacle lens in a spectacle frame is aligned to a corresponding eye of a wearer; however, it may also be possible to align only a single spectacle lens in a spectacle frame to a single corresponding eye of a wearer.

According to the present invention, the computer-implemented method comprises the following steps:
a) generating a three-dimensional model related to the wearer comprising
   - at least one spatial location of at least one reference point at the at least one eye of the wearer,
   - at least one spatial direction vector specifying at least one line of sight of the at least one eye of the wearer, and
   - a relationship between the at least one spatial location of at least one reference point at the at least one eye of the wearer and spatial locations of at least three characteristic defining features at the spectacle frame;
b) determining the at least one centration parameter by adjusting at least one lens design parameter of the at least one spectacle lens in the spectacle frame to the three-dimensional model related to the wearer; and
c) automatically modifying the three-dimensional model related to the wearer to assume a habitual head posture of the wearer prior to determining the at least one centration parameter.

The indicated steps may, preferably, be performed in an order commencing with step a), continuing with step c) and, subsequently, finishing with step b). Herein, any one or all of the indicated steps may be repeated at least once times and/or performed concurrently at least in part.

The method according to the present invention is a computer-implemented method. As generally used, the term "computer-implemented method" refers to a method which involves a programmable apparatus, in particular, a computer, a computer network, or a readable medium carrying a program, whereby at least one of the steps of the method, in particular all steps, are performed by using at least one computer program. Alternatively, the at least one computer program may be accessible by an apparatus which may be adapted for performing the method via a network, such as via an in-house network or via internet. With particular regard to the present invention, the present method can, thus, being performed on a programmable apparatus which is configured for this purpose, such as by providing a computer program which is configured for such a purpose.

Based on standard ISO 13666:2019, also herein referred to as "Standard", 3.5.2, the term "spectacle lens" refers to an optical lens which is used for at least one of a determination or a correction of a defective vision of a wearer of the optical lens, wherein the optical lens is carried in front of the eye of the wearer, thereby avoiding a direct contact with the eye of a wearer. Instead of the term "wearer", a different term, such as "person", "subject", or "user", may also be applicable. Further, term "pair of spectacle lenses" refers to a combination of a right spectacle lens which is configured to correct at least one refractive error of the right eye of a user and a left spectacle lens which is configured to correct at least one refractive error of the left eye of a user. Further, the term "eyeglasses" or simply "glasses" refers to an element which comprises a pair of spectacle lenses and a spectacle frame, wherein each spectacle lens is received by the spectacle frame.

As further generally used, the term "spectacle frame" refers to a mount which is designed for fixedly receiving the pair of the spectacle lenses. For this purpose, the spectacle frame can have a receptacle on a right side and on a left side for each spectacle lens. The spectacle frame may comprise a transparent or non-transparent material which may, preferably, be solid but flexible and light. In general, a distinction can be made between "full-rim glasses" in which the frame encloses the pair of the spectacle lenses, "half-rim glasses" in which the pair of the spectacle lenses is only partially attached to the frame, and "frameless spectacles" in which each spectacle lens is only attached to the spectacle frame by using a support. By removably attaching the spectacle frame to the head of the wearer, particularly at spatial locations at the nose and at each ear of the wearer, at least three individual placement areas may be defined. As used herein, the term "placement area" refers to a spatial location at which the spectacle frame touches a portion of the head of the wearer, in particular at the spatial locations at the nose and at each ear of the wearer, in order to removably attach the spectacle frame to the head of the wearer. In addition, the spectacle frame may comprise further components, in particular a pair of temples for wearing the eyeglasses on the ears and a pair of nose pads for wearing the eyeglasses on the nose of the user. Herein, each nose pad can be formed as part of the spectacle frame or, as an alternative, provided via a separate mount, typically, denoted as "pad arm". However, for the purposes of the present invention the further components of the spectacle frame may, preferably, remain outside consideration.

According to step a), a three-dimensional model related to the wearer is generated, wherein the three-dimensional model related to the wearer is based on a set of data comprising
- at least one spatial location of at least one reference point at the at least one eye of the wearer,
- at least one spatial direction vector specifying at least one line of sight of the at least one eye of the wearer, and
- a relationship between the at least one spatial location of at least one reference point at the at least one eye of the wearer and spatial locations of at least three characteristic defining features at the spectacle frame.

As used herein, the term "set of data" refers to a set of parameters by which three-dimensional model is related to the wearer, in particular at least the forehead portion of the wearer. As further used herein, the term "generating" or any grammatical variation thereof refers to a process of providing a three-dimensional model related to the wearer which is based on the indicated data that are related to the wearer. As further used herein, the term "model" refers to a simulation which is configured to provide a representation of at least the forehead of the wearer in a numerical fashion to be processed by using a computer. As further used herein, the term "forehead" refers to a portion of the head of the wearer which covers the eye area and, preferably, the nose and the ears of the wearer. In this fashion, the simulation may be configured to provide a representation of a portion of the head of the wearer which may at least cover the eyes of the wearer and the placement areas at the nose and each ear of the wearer. As used herein in connection with the term "model", the term "three-dimensional" indicates that the model as provided comprises coordinates in all three spatial dimensions and is, thus, not restricted to a two-dimensional representation. As a result, the model related to the wearer can be rotated about any desired angle within the three-dimensional space.

As further used herein, the term "spatial location" indicates a spatial position of the three-dimensional model related to the wearer in a reference system which may be defined by the three-dimensional model of the normal head. In order to express the spatial position of the dimensional model related to the wearer, three independent positions, such as indicated by a first triple *(x, y, z)* in Cartesian coordinates, may, preferably, be used. However, using a different kind of positions in a different type of coordinate system, such as in a cylindrical coordinate system or in a polar coordinate system, may also be feasible.

As further used herein, the term "angular orientation" indicates a spatial orientation of the three-dimensional model related to the wearer in the reference system which may be defined by the three-dimensional model of the normal head. Herein, the angular orientation of the head of the wearer may, preferably, be expressed by a three independent angles, such as indicated by a second triple *(θ, ψ, ϕ)* in polar coordinates with respect to an orientation of the normal head. Herein, the angle *θ* refers to a "tilt angle" or "pitch angle" each of which indicates a rotation of the head of the wearer around a lateral axis of the head of the wearer; the angle *ψ* refers to a "roll angle" which indicates a rotation of the head of the wearer around a medial axis of the head of the wearer; and the angle *ϕ* refers to a "pan angle" or a "yaw" angle" each of which indicates a rotation of the head of the wearer around an axial axis of the head of the wearer.

As further used herein, the term "reference point" at an eye of the wearer denotes a uniquely determinable point on the eye of the user, which is preferably connected to the at least one line of sight of the wearer through the spectacle lens, preferably as an initial point of a "spatial direction vector", which specifies the at least one line of sight of the eye of the wearer. Herein, the reference point at the at least one eye of the wearer can, preferably, be selected from at least one of
- a pupil center;
- a pupillary reflex;
- a corneal apex; or
- a center of rotation of the eye.
However, a further type of reference point may also be feasible.

As further used herein, the term "line of sight" denotes, according to the Standard, 3.2.24, a spatial direction through which the wearer of the spectacle lens views through the spectacle lens. In a general, a "primary direction" is used, according to the Standard, 3.2.25, as the line of sight in the horizontal direction through the spectacle lens, straight-ahead to a visual target situated at infinity. As particularly preferred, the line of sights of both eyes extend parallel to one another. Further, at least line of sights can be specified for each eye of the user, specifically in a multi-focal spectacle lens or a progressive spectacle lens, in particular selected from a a distant viewing direction, a near viewing direction and, optionally, an intermediate viewing direction. For further details with respect to the terms "reference point", "line of sight" and "spatial direction vector", reference can be made to the Standard and to WO 2020/178167 A1.

As further indicated above, the three-dimensional model related to the wearer comprises a relationship between the at least one spatial location of at least one reference point at the at least one eye of the wearer and spatial locations of at least three characteristic defining features at the spectacle frame. With respect to the terms "spatial location" and "reference point", reference can be made to the definitions as provided above. As used herein, the term "characteristic defining feature" refers to at least one feature specifying the spatial location and the angular orientation of the spectacle frame. For this purpose, it is, however, not required that a spectacle frame may be physically present; using a virtual representation of the spectacle frame may also be feasible. Each of the at least three characteristic defining features at the spectacle frame can, preferably, be selected from a placement area of the spectacle frame, wherein the term "placement area", as defined above, indicates the spatial location at which the spectacle frame touches a portion of the head of the wearer. In particular, each of the at least three characteristic defining features at the spectacle frame can, more preferred, be selected from a spatial location at the nose and at each ear of the wearer at which the spectacle frame is removably attached to the head of the wearer. However, further kinds of characteristic defining features may also be feasible, such as a line attached to each temple of the spectacle frame. As a result of using this relationship, the spatial location of the spectacle frame is indicated with respect to the spatial location of the at least one eye of the wearer, thus, allowing an appropriate adjustment of at least one lens design parameter of the at least one spectacle lens in the spectacle frame to the three-dimensional model related to the wearer during determining the at least one centration parameter according to step b) as described below in more detail.

In a preferred embodiment of the present invention, the representation of at least the forehead of the wearer may be based on a three-dimensional parametric model of a normal head. As used herein, the term "parametric model" refers to a particular kind of model which uses a plurality of parameters to represent the normal head. As generally used, the term "normal head" refers to a statistical model of the head representing a plurality of heads of different persons. Herein, the three-dimensional model related to the wearer may, preferably, be described by using a comparative set of data. As used herein, the term "comparative set of data" refers to a particular set of parameters providing a representation of at least the forehead of the wearer compared to the normal head. In a particular embodiment, the comparative set of data may comprise at least
- a set of parameters related to a deformation of the three-dimensional model related to the wearer with respect to the normal head;
- a spatial location of the head of the wearer; and
- an angular orientation of the head of the wearer with respect to an orientation of the normal head.

As used herein, the term "deformation" indicates a deviation of the three-dimensional model related to the wearer with respect to the three-dimensional model of the normal head. For this purpose, a deformation mapping comprising a set of free parameters may be used, wherein the set of free parameters may be selected in a fashion that the three-dimensional model related to the wearer may be in accordance with the three-dimensional model of the normal head as far as possible. For further details with regard to the three-dimensional model of the normal head and the corresponding deformation mapping, reference may be made to Booth, J., Roussos, A., Zafeiriou, S., Ponniahy, A. and, Dunaway, D., A 3D Morphable Model learnt from 10,000 faces, 2016 IEEE Conference on Computer Vision and Pattern Recognition (CVPR), 2016, pp. 5543-5552.

In a preferred embodiment of the present invention, at least one three-dimensional scan of at least a forehead portion of the wearer may be recorded. Alternatively or in addition, at least two images of at least a forehead portion of the wearer, wherein the at least two images may, preferably, be recorded under different angles with respect to an optical axis of at least one camera comprised by at least one recording system, wherein the angles may differ from each other by a value of at least 1°, preferably of at least 5°, more preferred of at least 10°. As used herein, the term "recording" or any grammatical variation thereof refers to a process of generating at least one of an image or a scan of the head of the wearer or at least a forehead portion thereof, preferably by using at least one recording system as described below in more detail. As further used herein, the term "image" refers to at least one two-dimensional recording of the head of the wearer or at least the forehead portion thereof which may, preferably, be recorded by using the at least one recording system. However, by combining the at least two images being recorded under different angles, a three-dimensional representation of at least the forehead of the wearer can be generated. Alternatively or in addition, the at least two images may be retrieved from a video sequence illustrating at least the forehead of the wearer under different angles. As used herein, the term "video sequence" refers to a plurality of images which are consecutively recorded within a period of time. As further used herein, the term "scan" refers to at least one three-dimensional recording of the head of the wearer or at least the forehead portion thereof, which comprises coordinates in all three spatial dimensions and is, thus, not restricted to a two-dimensional representation. As a result of recording the at least two images under different angles and/or the at least one three-dimensional scan of at least the forehead portion of the wearer, the three-dimensional representation of at least the forehead of the wearer can be rotated about any desired angle within the three-dimensional space.

In a further preferred embodiment of the present invention, the at least one three-dimensional representation of at least the forehead portion of the wearer may be adapted to the three-dimensional parametric model of a normal head. For this purpose, the three-dimensional model related to the wearer which is based on the at least two images as recorded under different angles and/or the at least one three-dimensional scan of at least the forehead portion of the wearer can be transferred to a spatial location and a spatial orientation of the three-dimensional model of the normal head by using the first triple *(x, y, z)* for the spatial location and the second triple *(θ*, *ψ, ϕ)* for the angular orientation, in particular by applying at least one of an inverse movement or an inverse rotation. However, further manners of performing such an adaption may also be conceivable.

According to step c), the three-dimensional model related to the wearer is automatically modified by using a habitual head posture of the wearer prior to determining the at least one centration parameter according to step b) as described below in more detail. As generally used, the term "modifying" or any grammatical variation thereof refers to a process of adjusting at least one first value to at least one further value by using a predefined condition. In accordance with the present invention, the three-dimensional model related to the wearer is automatically modified to assume a habitual head posture of the wearer as the predefined condition. As further generally used, the term "automatically" refers to a manner of adjusting the at least one first value to the at least one further value by using at least one computer-implemented procedure which does not require any user interaction during executing the at least one computer-implemented procedure. In this fashion, the user can, before an execution of the at least one computer-implemented procedure, define any parameters of the at least one computer-implemented procedure which can, subsequently, operate without any further instructions from a user. As a result, the at least one computer-implemented procedure may operate in a fast, reliable, and reproducible fashion, preferably until it may terminate upon meeting a condition, such as an expiry of a time interval or an accomplishment of at least one logical condition, or following an external triggering event.

As further used herein, each of the terms "natural habitus", "habitual head posture" or "habitual head and body posture" refers to an unobserved, natural, relaxed, and comfortable posture of the head and of the body which the wearer, typically, assumes in in absence of psychological stress. As used herein, the phrase "assuming a posture" or any grammatical variation thereof describes an observation that the body of the wearer or a portion thereof, in particular the head of the wearer, is maintained by the wearer in a particular form within the three-dimensional space, independently from whether the wearer may, consciously or unconsciously, maintain this particular form.

Automatically modifying the three-dimensional model related to the wearer to assume the habitual head posture of the wearer may, preferably, comprise adjusting the angular orientation of the head of the wearer in the three-dimensional model related to the wearer, to a natural angular orientation of the head of the wearer as determined from analyzing the habitual head posture of the wearer. As used herein, the term "analyzing" or any grammatical variation thereof refers to a process of determining at least one value for at least parameter being configured to describe the habitual head posture of the wearer. For suitable parameters, reference can be made to the description below. As further used herein, the term "natural angular orientation" refers to an angular orientation of the head of the wearer in a habitual head posture, For this purpose, it may be sufficient to automatically alter the tilt angle *θ* as determined from the at least two images as recorded under different angles and/or the at least one three-dimensional scan of at least the forehead portion of the wearer in a manner that the three-dimensional model related to the wearer assumes a natural tilt angle *θ* which represents the habitual head posture of the wearer. Herein, the roll angle *ψ* and the pan angle *ϕ* may be neglected, thus, allowing a more rapid execution of the at least one computer-implemented procedure. However, further taking into account the roll angle *ψ* and/or the pan angle *ϕ* in addition to the tilt angle *θ* may also be feasible and may, in particular, be beneficial for a purpose of a graphical display of the three-dimensional model related to the wearer with or without a three-dimensional model of the spectacle frame.

In a preferred embodiment, in which the three-dimensional model of the normal head may have been determined by using a plurality of three-dimensional scans of at least the forehead portion of a plurality of persons each assuming the natural habitus, the angular orientation of the normal head may already represent a statistically most probable natural habitus. As a result, the automatic modification of the three-dimensional model related to the wearer to assume the natural habitual head posture can be performed by applying an inverse rotation by using the second triple *(Δ θ, Δψ, Δϕ)* to the three-dimensional model related to the wearer which is based on the at least two images as recorded under different angles and/or the at least one three-dimensional scan of at least the forehead portion of the wearer. In a special case of a zero triple (0,0,0), no change would be applied to the three-dimensional model of the head of the wearer. However, using a different formalism, such as described in https://en.wikipedia.org/wiki/Rotation formalismsin three dimensions, to express the rotation in three dimensions may equally be feasible.

In a particular embodiment, analyzing the habitual head posture of the wearer may, further, comprise weighing at least one component of the angular orientation of the head of the wearer in at least one coordinate system. In particular, a set of weight factors *(w₁*, *w₂, w₃)* can be used in form of a modified second triple *(*w₁*Δθ*, w*₂Δψ,* w₃*Δϕ)* for alternating the angular orientation in a manner that an attenuated orientation may be obtained. In this fashion, the angular orientation of the head of the wearer as determined from the at least two images as recorded under different angles and/or the at least one three-dimensional scan of at least the forehead portion of the wearer can be maintained to a certain extent. The weight factors can either be set statically or be a result of a training process, which can be trained by using at least one angle that the operator of the recording system would apply to a final result. Alternatively or in addition, the weights can be manually adjustable by the operator. Via the weights, an excessive automatic modification of the head posture that individual users of the system might perceive as unwanted or artificial, could, in particular, be avoided. As an alternative, thresholds can be used to apply the automatic modification only for excessive deviations of the head position of the wearer as obtained by using the at least two images and/or the at least one three-dimensional scan to the normal head position. For this purpose, an assumption can be used applied that the operator of the recording system may, typically, instruct the person to be scanned to take a natural head posture, however, in some cases this assumption can be considered as failing, in particular, when an obviously unnatural body posture may be detected by observing a considerably high deviation from the normal head posture.

Alternatively or in addition, analyzing the habitual head posture of the wearer may comprise measuring an angle of inclination of the spectacle frame with respect to the spatial location of the head of the wearer using an inclination sensor comprised by or attached to the spectacle frame. In particular, a zero-view head tilt may be determined from at least one value as measuring for the angle of inclination of the spectacle frame in the as-worn position. By way of example, the method and device as disclosed in DE 10 2008 018 198 A1 may be used for this purpose; however further methods and devices may also be feasible.

Alternatively or in addition, analyzing the habitual head posture of the wearer may comprise determining the natural angular orientation of the head of the wearer by adjusting the natural angular orientation of the head of the wearer to the three-dimensional parametric model of a normal head using data as obtained from a training process. For this purpose, a plurality of three-dimensional scans of at least a forehead portion of the wearer which have been recorded by at least one known recording system can be used as reference data, wherein the reference data can, concurrently or subsequently, be used for training an avatar, by which process a model can be determined which takes into account a modification for the head posture for a given avatar. By way of example, Zeiss VISUFIT 1000 can, preferably, be used as recording system and target centering system, while Video Infral^{®} can, preferably, be used as a reference system for determining the at least one centration parameter under a natural body posture. Owing to a large distance of the wearer from the location of the recording system, the Video Infral^{®} may, particularly, contribute to a natural head and body posture of the wearer when wearing a pair of eyeglasses. For training purposes, the wear pantoscopic angle of the spectacle frame may be registered with a pantoscopic tilt angle of the target system. Alternatively or in addition, a three-dimensional orientation of the spectacle frame can be deduced from the centration data as obtained by the reference system. In particular, the spectacle frame being horizontal to both systems can also be used as input into the training process. As a result, a change of the angular orientation, specifically a change of the at least one tilt angle Δ*θ*, of the head of the wearer as determined by using Video Infral^{®} and VISUFIT 1000 data can be used as the reference value for the modification to be used as input into the training process. A further input can be a scanned three-dimensional model head model of the target system from which a trained model can be used to deduce a modification angle. As a result, the trained model may be configured to determine the at least one angle from the scanned three-dimensional model related to the wearer and, finally, the at least one centration parameter under natural habitual body posture. However, further kinds of training processes may also be conceivable.

Alternatively or in addition, analyzing the habitual head posture of the wearer may comprise determining the natural angular orientation of the head of the wearer by adjusting the natural angular orientation of the head of the wearer by applying artificial intelligence, in particular machine learning, especially by using a neuronal network as described below in more detail. In this particularly preferred embodiment, analyzing the habitual head posture of the wearer may comprise determining the natural angular orientation of the head of the wearer by adjusting the natural angular orientation of the head of the wearer by using at least one tuple of at least one modification angle as output obtained from a trained neural network generated by using a training process. For this purpose, a plurality of tuples of three-dimensional scans and of at least one corresponding modification angle may be used as input, wherein the scans may comprise at least the forehead portion of the wearer recorded by at least one known recording system. As described above, Zeiss VISUFIT 1000 can, preferably, also be used here as the recording system and the target centering system, while Video Infral^{®} can, preferably, also be used here as the reference system for determining the at least one centration parameter under a natural body posture which can be used to obtain the desired at least one tuple of the at least one modification angle. As an alternative, a single image or a plurality of images can be used as input to the training process to obtain the at least one tuple of the at least one modification angle.

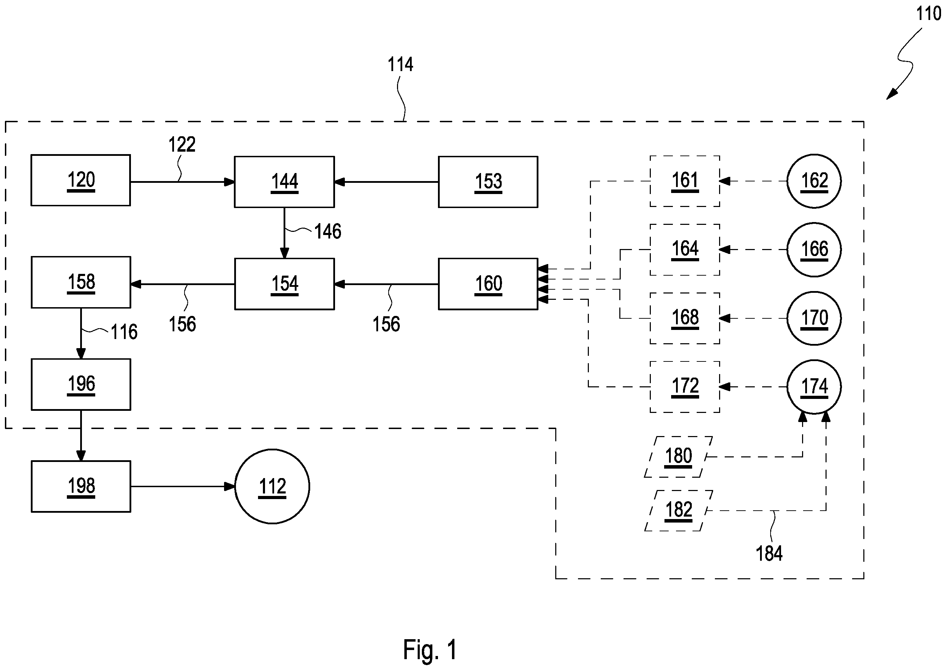

Alternatively or in addition, analyzing the habitual head posture of the wearer may comprise determining the natural angular orientation of the head of the wearer by recording at least one parameter related to at least the forehead portion of the wearer using at least one body tracking system and deriving the natural angular orientation of the head of the wearer from the at least one parameter. By way of example, the body tracking system as described by Anzalone, S.M., Chetouani, M., Tracking Posture and Head Movements of Impaired People During Interactions with Robots*,* in Petrosino, A., Maddalena, L., et al., New Trends in Image Analysis and Processing, Proceedings of the ICIAP 2013 Workshop, 2013, Springer, page 41, Fig. 1, may be used for this purpose. As an alternative, the body tracking system as described in Joo, H., Simon, T., Sheikh, Y., Total Capture: A 3D Deformation Model for Tracking Faces, Hands, and Bodies, Proceedings of the IEEE Conference on Computer Vision and Pattern Recognition (CVPR), 2018, pp. 8320-8329, which uses a plurality of cameras to obtain a photogrammetric reconstruction, can be used. Further examples are described in Andriluka, M., Iqbal, U., Insafutdinov, E., Pishchulin, L., Milan, A., Gall, J., and Schiele, B., PoseTrack: A Benchmark for Human Pose Estimation and Tracking, Proceedings of the IEEE Conference on Computer Vision and Pattern Recognition (CVPR), 2018, pp. 5167-5176, showing a feasibility of pose tracking based on video sequences for persons in upright postures including walking and standing. As a further example, a VicoVR or a TVico Wireless 3D Controller being a Bluetooth peripheral accessory which provides full body tracking capability, see vicovr.com and tvico.io, respectively, may also be used as body tracking system for such a purpose. Further, the method as disclosed in US 10,001,663 B2 can also be used for this purpose. However, a further kind of body tracking system may also be feasible. Herein, an algorithm may, in general, be employed for deriving the natural angular orientation of the head of the wearer from a skeleton model as generated by the at least one body tracking system. Typically, the body tracking system may be based on at least one of an articulated model or a skeleton model that may output orientations of body parts in the three-dimensional space. For a purpose of detecting the natural habitual head posture of the wearer, detecting only the head posture may, preferably, be sufficient. Herein, the head orientation can be tracked over time and at least one of a mean value or a median value can be determined in order to serve as an input to the analysis of the habitual head posture of the wearer.

Alternatively or in addition, analyzing the habitual head posture of the wearer may comprise determining the natural angular orientation of the head of the wearer by determining the natural angular orientation of the head of the wearer from at least one of
- at least one image illustrating at least a forehead portion of the wearer; or
- at least one three-dimensional scan of at least the forehead portion of the wearer,
wherein the at least one image and/or the at least one three-dimensional scan was recorded in a natural habitus as assumed by the wearer. Herein, the at least one image and/or the at least one three-dimensional scan of the wearer may illustrate the wearer wearing a spectacle frame in an as-worn position as defined below; however, at least one further image and/or at least one further three-dimensional scan of the wearer illustrating the wearer without wearing a spectacle frame may also be feasible.

Alternatively or in addition, at least one of analyzing the habitual head posture of the wearer, determining the at least one modification angle, determining the as-worn position of the spectacle frame or the virtual representation of the spectacle frame, and determining the at least one centration parameter may be performed in a separate fashion at a different time and/or at a different location, in particular with respect to the wearer and to equipment used for such a purpose. In a preferred embodiment, analyzing the habitual head posture of the wearer, can already be performed in the shop of the optician after having recorded the at least one image and/or the at least one three-dimensional scan of the wearer, whereas determining at least one of the at least one modification angle, the as-worn position of the spectacle frame or the virtual representation of the spectacle frame, or the at least one centration parameter can be performed at a later time and a different location, specifically after the wearer has selected a type of spectacle frame from a plurality of models of spectacle frames by wearing a plurality of virtual copies of spectacle frames in the as-worn position. In this fashion, the wearer can select the type of a spectacle frame from a list of models of spectacle frames which can be virtually presented, especially by using a web application offering a virtual try-on of spectacle frames, and may, subsequently, express an order to initiate a process for producing at least one spectacle lens for the selected type of spectacle frame. For this purpose, the web application and/or the at least one processing device configured to determine the at least one centration parameter uses at least one of the modified three-dimensional model related to the wearer or the at least one modification angle both indicating the habitual head posture of the wearer in the as-worn position for the selected spectacle frame to determine the at least one centration parameter.

In a particularly preferred embodiment, determining the natural angular orientation of the head of the wearer from at least one of an image, a video sequence or a three-dimensional scan of the wearer may comprise selecting the at least one image, video sequence or a three-dimensional scan of the wearer illustrating at least the forehead portion of the wearer as recorded in the natural habitus of the wearer from a plurality of images, video sequences or three-dimensional scans in a file system. As generally used, the term "file system" refers to a storage unit configured to receive and to provide upon request a plurality of data files each comprising an image, a video sequence or a three-dimensional scan, or a pointer to an image, a video sequence or a three-dimensional scan. In particular, the file system can, preferably, be located on a data carrier that may be provided by the wearer. Alternatively or in addition, the file system can, also preferred, be located at a remote location, wherein the remote location may be accessible via a network, in particular an in-house network or via internet. In this fashion, at least one of an image, a video sequence or a three-dimensional scan of the wearer may be accessible that may illustrate at least the forehead portion of the wearer as recorded in the natural habitus as assumed by the wearer. Herein, the natural angular orientation of the head of the wearer may be determined from the image, the video sequence, or the three-dimensional scan of the wearer as provided in this manner. In particular, determining the natural angular orientation of the head of the wearer may comprise processing the at least one of the image, the video sequence, or the three-dimensional scan of the wearer in a fashion to extract the angular orientation of the head of the wearer, in particular at least the tilt angle *θ* representing the habitual head posture of the wearer. For this purpose, it may be advantageous that the at least one of the image, the video sequence, or the three-dimensional scan of the wearer may illustrate a side view of at least the forehead portion of the wearer, thus, facilitating the extracting of the tilt angle *θ* representing the habitual head posture of the wearer. As used herein, the term "side view" refers to a view of at least the forehead portion of the wearer parallel to the sagittal plane of the wearer. In general, it may, however, be possible to, alternatively or in addition, determine the roll angle *ψ* or the pan angle *ϕ* representing the habitual head posture of the wearer.

In a preferred embodiment, an image feature analysis can be used. As generally used, the "image feature analysis" refers to a process which comprises obtaining a spatial relationship between facial and head features, such as the pupils, contour points of the eye, such as points on or near the eye lids and eye sclera, and or a point on the head, such as a point on the ear, from the at least one image of the wearer. By way of example, the pupils of the wearer would be unnaturally low within the eye contour for an unnaturally uplifted head posture. Further, an angle of inclination of a line through at least one first defined point at the eye, such as the pupil, and at least one second defined point at the ear, such as the ear center, as determined from the at least one image of the wearer can be used as an indication of an unnatural head posture, thus, providing a basis for modifying the habitus as assumed by the wearer. However, a line through at least two further defined points may also be feasible.

In a further preferred embodiment, at least one specific feature of the spectacle frame as illustrated on at least one image showing the head of the wearer together with the spectacle frame in the as-worn position can be used to determine the at least one tuple of the at least one correction angle. In particular, a horizontal line of the spectacle frame in a frontal image and/or a main line of the temple of the spectacle frame in a side image can, preferably, be used for determining the at least one corrective angle. Herein, the horizontal line of the spectacle frame in a frontal image can, specifically be used for, determining for the roll angle *ψ,* while the main line of the temple of the spectacle frame in a side image line can, specifically, be used for determining the tilt angle *θ*. However, using at least one further specific feature of the spectacle frame as determined from at least one image for analyzing the habitual head posture of the wearer may also be feasible.

According to step b), at least one centration parameter for aligning the at least one spectacle lens in the spectacle frame to the at least one eye of the wearer is, eventually, determined by adjusting at least one lens design parameter of the at least one spectacle lens in the spectacle frame to the three-dimensional model related to the wearer. As used herein, the term "determining" or any grammatical variation thereof refers to a process of generating at least one representative result, in particular, by adjusting the at least one spectacle lens in the spectacle frame to the three-dimensional model related to the wearer. As further used herein, the term "aligning" or any grammatical variation thereof refers to a process of adjusting the at least one spectacle lens as comprised by the spectacle frame to the at least one eye of the wearer in a fashion that the desired correction of the defective vision of a wearer is accomplished as far as possible. As further used herein, the tem "lens design parameter" refers to a geometric value which is used in optimizing at least one surface of the at least one spectacle lens. Preferably, a back surface of the spectacle lens may be optimized prior to producing the spectacle lens in order to consider at least one individually determined corrective value of at least one refractive error of at least one eye of a user and the position of the spectacle lens in front of the respective eye. In accordance with the Standard, 3.2.13, the term "back surface" refers to a surface of the lens intended to be fitted nearer to the corresponding eye of the wearer. Alternatively or in addition, a front surface of the spectacle lens may be optimized in a similar fashion. In accordance with the Standard, 3.2.12, the term "front surface" refers to a surface of the lens intended to be fitted away from the corresponding eye of the wearer.

As generally used, the term "centration parameter" refers to a parameter which describes a spatial relationship between the at least one spectacle lens, the spectacle frame, and the three-dimensional model related to the wearer. For the purposes of the present invention, the at least one centration parameter may, preferably, be selected from at least one of:
- an interpupillary distance, also abbreviated to "PD", which is defined in the Standard, 3.2.28, as a distance between the centers of the pupils of the eyes of the wearer, when the eyes of the wearer are in a primary position further defined in the Standard, 3.2.25, as a direction of a line of sight, usually assumed to be the horizontal, to an object at an infinite distance measured with habitual head and body posture when looking straight ahead in unaided vision;
- a vertex distance between each spectacle lens and each eye of the wearer of the eyeglasses, wherein, according to the Standard, 3.2.40, the term "vertex distance" is defined as a horizontal distance between a back surface of the spectacle lens intended to be fitted nearer to the eye of the wearer and an apex of the cornea as measured with the eyes of the wearer in the primary position as defined above;
- a wear pantoscopic angle of the spectacle frame, which is, according to the Standard, 3.2.37, defined as a vertical angle between the horizontal and the perpendicular to a reference line passing through the apex of the grooves of the upper and lower rims of the spectacle frame in the vertical plane containing the primary direction as defined above; or
- a face form angle, also denoted as "wrap angle", which is, according to the Standard, 3.2.39, defined as an angle between a plane of the spectacle front and one of the right plane of the lens shape or the left plane of the lens shape.
However, at least one further centration parameter may, alternatively or in addition, be selected.

As further used herein, the term "adjusting" or any grammatical variation thereof refers to a process of fitting a model of the spectacle frame to the three-dimensional model related to the wearer. In a preferred embodiment, the process as disclosed in EP 3 425 446 A1 can be used for this purpose; however, using a further process may also be feasible. In accordance with the present invention, the three-dimensional model related to the wearer which has been automatically modified to assume the habitual head posture of the wearer during to step c) is used during step b) for determining the at least one centration parameter. Specifically, the model of the spectacle frame may be fitted to the automatically modified three-dimensional model related to the wearer which exhibits the habitual head posture of the wearer. In this fashion, it can be ensured that the natural head position of the wearer is used for selecting a spectacle frame, such as when choosing an inclination of a spectacle frame with respect to the head of the wearer.

In a particularly preferred embodiment, the determining the at least one centration parameter may comprise the wearer to actually wear the spectacle frame carrying the at least one spectacle lens in an as-worn position. As defined in the Standard, 3.2.36, the terms "as-worn position" or "position of wear" refer to a position, including an orientation, of the at least one spectacle lens relative to the at least one corresponding eye and face of the wearer during wear measured with habitual head and body posture of the wearer. Alternatively or in addition, a virtual copy of the spectacle frame, preferably carrying the at least one spectacle lens, may be generated, wherein an avatar of the wearer which may be representing at least a forehead portion of the wearer may wear the virtual copy of the spectacle frame in the as-worn as defined above with respect to the avatar of the wearer. However, further procedures for determining the at least one centration parameter may also be conceivable.

In a particular embodiment, determining the at least one centration parameter may comprise displaying the three-dimensional model related to the wearer under the natural angular orientation of the head of the wearer. By way of example, Zeiss VISUFIT 1000 can, preferably, be used for displaying the three-dimensional model related to the wearer under the natural angular orientation of the head of the wearer, thus, showing a natural body posture to the optician and the wearer for confirmation prior to determining the at least one centration parameter. More particular, a digitized human eye can be applied to the three-dimensional model related to the wearer in a fashion that the digitized human eye can match an expected appearance under a changed head posture. Specifically, at least one line of sight of the at least one eye would be adapted to match at least one modified line of sight in the natural head posture. For this purpose, an anatomical model of the human eye can be matched and registered to the eye portion of the three-dimensional model related to the wearer in a fashion that a rotation of at least one eyeball can be applied.

In a further preferred embodiment, determining the at least one centration parameter can be performed in a separate fashion, specifically at a time and/or a location which could differ from the time and location of recording the at least one image and/or the at least one three-dimensional scan. As a result, it can be able by the optician and/or by a remote system to offer a virtual selection, fitting, centration, and initiating a process for producing at least one spectacle lens even in an event in which the wearer has already left the shop of the optician. In particular, a three-dimensional display and selection of spectacle frames in a virtual fashion may be performed by the wearer using a mobile device at one location. After finally selecting a particular spectacle frame, the selection can, subsequently, be transferred to an optician, wherein the optician can finalize the determination of the at least one centration parameter.

In a further aspect, the present invention relates to a computer program comprising instructions which, when the program is executed by a computer, cause the computer to carry out the methods according to the present invention. Specifically, the computer program may be stored on a computer-readable, non-transitory data carrier. Thus, specifically, any one of the method steps as indicated above may be performed by using a computer or a computer network, preferably by using a computer program.

In a further aspect, the present invention relates to a computer program product having program code means, in order to perform the methods according to the present invention when the program is executed on a computer or computer network. Specifically, the program code means may be stored on a computer-readable data carrier.

In a further aspect, the present invention relates to a data carrier having a data structure stored thereon, which, after loading into a computer or computer network, such as into a working memory or main memory of the computer or computer network, may execute any one of the methods according to one or more of the embodiments disclosed herein.

In a further aspect, the present invention relates to a computer program product with program code means stored on a machine-readable carrier, in order to perform the methods according to one or more of the embodiments disclosed herein, when the program is executed on a computer or computer network. As used herein, the term "computer program product" refers to the program as a tradable product. The product may generally exist in an arbitrary format, such as in a paper format, or on a computer-readable data carrier. Specifically, the computer program product may be distributed over a data network, such as the internet.

In a further aspect, the present invention relates to a modulated data signal which comprises instructions readable by a computer system or computer network, for performing any one of the methods according to one or more of the embodiments as disclosed herein.

In a further aspect, the present invention relates to a method for producing at least one spectacle lens. Accordingly, the producing of the at least one spectacle lens comprises processing at least one lens blank by using at least one centration parameter determined by the method according to any one of the embodiments as disclosed herein.

For further details with respect to the computer program and the method for producing at least one spectacle lens, reference can be made to the method for determining at least one centration parameter for aligning at least one spectacle lens in a spectacle frame to at least one eye of a wearer as disclosed elsewhere herein.

In a further aspect, the present invention relates to a processing device for determining at least one centration parameter for aligning at least one spectacle lens in a spectacle frame to at least one eye of a wearer. According to the present invention, the processing device is configured to
- generate a three-dimensional model related to the wearer comprising
   ∘ at least one spatial location of at least one reference point at the at least one eye of the wearer,
   ∘ at least one spatial direction vector specifying at least one line of sight of the at least one eye of the wearer, and
   ∘ a relationship between the at least one spatial location of at least one reference point at the at least one eye of the wearer and spatial locations of at least three characteristic defining features at the spectacle frame; and
- determine the at least one centration parameter by adjusting at least one lens design parameter of the at least one spectacle lens in the spectacle frame to the three-dimensional model of the wearer,
- automatically modify the three-dimensional model related to the wearer to assume a habitual head posture of the wearer prior to determining the at least one centration parameter.

As generally used, the term "processing" refers to applying at least one algorithm in order to extract data from at least one input file, wherein the data is provided, such as for further processing, as at least one output file. As further generally used, the term "data" refers to at least one piece of information. With particular regard to the present invention, the at least one piece of information may be related to at least one of:
- at least one three-dimensional scan of at least the forehead portion of the wearer;
- a three-dimensional parametric model of a normal head;
- a three-dimensional model related to the wearer;
- information with respect to the natural habitual head posture of the wearer; or
- at least one centration parameter.
However, further pieces of information may also be feasible.

Herein, the at least one algorithm may be configured to determine desired data by evaluating the at least one input file according to a predefined scheme, wherein artificial intelligence, in particular at least one machine learning algorithm, may also be applied, especially by using a neuronal network. As already indicated above, the determining of the desired data from the at least one input file may be performed in accordance with a predefined scheme, however, artificial intelligence, in particular machine learning, may also be applied, especially by using a neuronal network. As generally used, the term "machine learning" refers to a process of applying artificial intelligence to automatically generate a statistical model for classification or regression. A machine learning algorithm configured to generate the desired model based on a large number of training data sets can, preferably, be used. Herein, the machine learning algorithm can be a supervised algorithm or a self-learning algorithm. The machine learning algorithm can use and/or comprise a neural network, which may, preferably, be developed into a trained neural network by using the at least one training data set. The neural network may comprise at least one element selected from hierarchical decision trees, Hough forest, regression forest, Convolutional Neural Network (CNN), Deep Neural Network (DNN) Residual Neural Network, Pixel-wise Voting, Pixel-wise Fusion Network, Deep learning. Alternatively or additionally, the use of at least one other artificial intelligence method, preferably a kernel method, especially a Support Vector Machine (SVM), may also be feasible.

As generally used, the term "processing device" refers to an apparatus which is designated for determining the data from the at least one input file, which may, preferably, be provided to the processing device by at least one input interface, and to provide the data, such as for further processing, preferably by at least one output interface. Specifically, the processing device may comprise at least one of an integrated circuit, in particular an application-specific integrated circuit (ASIC), or a digital processing device, in particular at least one of a digital signal processor (DSP), a field programmable gate array (FPGA), a microcontroller, a microcomputer, a computer, or an electronic communication unit, specifically a smartphone or a tablet. Further components may be feasible, in particular at least one of a data acquisition unit, a preprocessing unit, or a data storage unit. The processing device may, preferably, be configured to perform at least one computer program, in particular at least one computer program performing or supporting the determining of the data from the at least one input file, wherein the processing of the data be performed in a consecutive, a parallel, or a combined fashion.

In a further aspect, the present invention relates to a system for determining at least one centration parameter for aligning at least one spectacle lens in a spectacle frame to at least one eye of a wearer. According to the present invention, the system comprises
- at least one recording system configured to record at least one of
   ∘ at least two images of at least a forehead portion of the wearer;
   ∘ at least one three-dimensional scan of at least the forehead portion of the wearer;
   at least one processing device for determining at least one centration parameter for aligning at least one spectacle lens in a spectacle frame to at least one eye of a wearer as disclosed elsewhere herein, wherein at least one of the at least one processing device is further configured automatically modify the three-dimensional model related to the wearer to assume a habitual head posture of the wearer prior to determining the at least one centration parameter by adjusting at least one lens design parameter of the at least one spectacle lens in the spectacle frame to the three-dimensional model related to the wearer to a natural angular orientation of the head of the wearer determined from analyzing the habitual head posture of the wearer; and
- at least one device for determining the natural angular orientation of the head of the wearer.

As generally used, the term "system" refers to a plurality of spatial entities comprising at least the above-listed components. Herein, each of the listed components may be provide as an individual component, however, two but not all of the components may be integrated into a common component. In particular, the system for determining at least one centration parameter comprises the processing device for determining at least one centration parameter as described above and below in more detail.

As further generally used, the term "recording system" refers to spatial entity designated for record at least two images of at least a forehead portion of the wearer and/or at least one three-dimensional scan of at least a forehead portion of the wearer. With respect to the terms "recording", "image", "scan" and "forehead", reference can be made to the respective definitions as provided above. In particular, the recording system may be selected from at least one of a known recording system, such as a Zeiss VISUFIT 1000, or a 3D face and head scanning system implemented as a mobile application implemented on an electronic communication unit, specifically a smartphone or a tablet. However a further type of recording system may also be feasible.

For further details with respect to the processing device and the system, reference can be made to the method for determining at least one centration parameter for aligning at least one spectacle lens in a spectacle frame to a head of a wearer as disclosed elsewhere herein.

With respect to the prior art, the method, computer program, processing device and system according to the present invention exhibits the following advantages. In particular, they allow modifying the actual head posture as assumed by the wearer during the scanning procedure to the desired natural habitual procedure head posture of the wearer without user intervention. Further, it is possible herewith to determine the at least one centration parameter in a separate fashion at a time and/or a location which could differ from the time and location of the scanning procedure, thus, being able to offer a virtual selection, fitting, and centration of the at least one spectacle lens even in an event in which the wearer has already left the shop of the optician. In addition, an improved representation of the head of the wearer in the avatar in the natural head position is possible, thereby ensuring that the habitual head position of the wearer is used for selecting a spectacle frame, such as when choosing an inclination of a spectacle frame with respect to the head of the wearer. Further, using the habitual head posture enables the centration of a progressive lens which requires accurate determination of the fitting height of the centration point of the lens. Also other types of lenses requiring accurate fitting height can be selected and, if desired, purchased by the wearer from a remote location without a need to visit a store of the optician.

Analyzing the natural head and body posture in connection using a method as disclosed herein can *mutatis mutandis* also be used for further kinds of applications. A preferred example may be a producing of customized clothing, such as suits or costumes; jewelry; or accessories. For these kinds of applications, using a habitual head and body posture can also be advantageous. Herein, generating a three-dimensional model of further portions of the body apart from at least the forehead portion may, however, be much more elaborative. This is, particularly, due to a larger number of degrees of freedom that require considerably more scans to allow a modelling of further anatomical features, such as limbs, e.g., upper arms, forearms, or fingers, especially with regard to their length or direction, or joints, especially with regard to their range or rotation angle. Further, using the methods and devices for determining the habitual head and body posture as disclosed herein may also be feasible.

As used herein, the terms "have", "comprise" or "include" or any grammatical variation thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

Summarizing, the following Embodiments are particularly preferred within the scope of the present invention:
Embodiment 1. A computer-implemented method for determining at least one centration parameter for aligning at least one spectacle lens in a spectacle frame to at least one eye of a wearer, the method comprising the following steps:
   a) generating a three-dimensional model related to the wearer comprising:
      - at least one spatial location of at least one reference point at the at least one eye of the wearer,
      - at least one spatial direction vector specifying at least one line of sight of the at least one eye of the wearer, and
      - a relationship between the at least one spatial location of at least one reference point at the at least one eye of the wearer and spatial locations of at least three characteristic defining features at the spectacle frame;
   b) determining the at least one centration parameter by adjusting at least one lens design parameter of the at least one spectacle lens in the spectacle frame to the three-dimensional model related to the wearer; and
   c) automatically modifying the three-dimensional model related to the wearer to assume a habitual head posture of the wearer prior to determining the at least one centration parameter.
Embodiment 2. The method according to the preceding Embodiment, wherein automatically modifying the three-dimensional model related to the wearer comprises analyzing the habitual head posture of the wearer from at least one of:
   - at least one image of at least a forehead portion of the wearer;
   - at least one three-dimensional scan of at least the forehead portion of the wearer.
Embodiment 3. The method according to any one of the preceding Embodiments, wherein automatically modifying the three-dimensional model related to the wearer comprises adjusting an angular orientation of a head of the wearer in the three-dimensional model related to the wearer to a natural angular orientation of the head of the wearer determined from analyzing the habitual head posture of the wearer.
Embodiment 4. The method according to any one of the two preceding Embodiments, wherein analyzing the habitual head posture of the wearer comprises determining the natural angular orientation of the head of the wearer by at least one of:
   - measuring an angle of inclination of the spectacle frame with respect to the spatial location of the head of the wearer using an inclination sensor comprised by or attached to the spectacle frame;
   - adjusting the natural angular orientation of the head of the wearer to the three-dimensional parametric model of a normal head using data obtained from a training process;
   - recording at least one parameter related to at least the forehead portion of the wearer using a body tracking system and deriving the natural angular orientation of the head of the wearer from the at least one parameter;
   - determining the natural angular orientation of the head of the wearer from at least one image of the wearer illustrating at least the forehead portion of the wearer, the at least one image of the wearer recorded in a natural habitus of the wearer.
Embodiment 5. The method according to the preceding Embodiment, wherein the at least one image of the wearer illustrates the wearer wearing a spectacle frame in an as-worn position.
Embodiment 6. The method according to any one of the two preceding Embodiments, wherein the at least one image of the wearer illustrates a side view of at least the forehead portion of the wearer.
Embodiment 7. The method according to any one of the three preceding Embodiments, wherein determining the natural angular orientation of the head of the wearer from at least one image of the wearer comprises selecting the at least one image of the wearer illustrating at least the forehead portion of the wearer recorded in the natural habitus of the wearer from a plurality of images in a file system.
Embodiment 8. The method according to the preceding Embodiment, wherein the file system is located at least one of on a data carrier or at a remote location, the remote location being accessible via a network.
Embodiment 9. The method according to the preceding Embodiment, wherein the remote location is accessible via an in-house network or via internet.
Embodiment 10. The method according to the preceding Embodiment, wherein analyzing the habitual head posture of the wearer comprises weighing at least one component of the angular orientation of the head of the wearer in at least one coordinate system.
Embodiment 11. The method according to any one of the nine preceding Embodiments, wherein determining the at least one centration parameter comprises displaying the three-dimensional model related to the wearer under the natural angular orientation of the head of the wearer.
Embodiment 12. The method according to any one of the preceding Embodiments, wherein generating the three-dimensional model related to the wearer comprises recording and adapting at least one of:
   - at least two images of at least a forehead portion of the wearer; or
   - the at least one three-dimensional scan of at least the forehead portion of the wearer to a three-dimensional parametric model of a normal head.
Embodiment 13. The method according to any one of the preceding Embodiments, wherein generating the three-dimensional model related to the wearer comprises determining a comparative set of data comprising at least:
   - a set of parameters related to a deformation of the three-dimensional model related to the wearer with respect to the normal head;
   - a spatial location of the head of the wearer; and
   - an angular orientation of the head of the wearer with respect to an orientation of the normal head.
Embodiment 14. The method according to the preceding Embodiment, wherein the angular orientation of the head of the wearer comprises at least one of:
   - a tilt angle;
   - a roll angle; and
   - a pan angle
   of the head of the wearer with respect to an orientation of the normal head.
Embodiment 15. The method according to any one of the preceding Embodiments, wherein determining the at least one centration parameter comprises at least one of:
   - wearing the spectacle frame on the head of the wearer in an as-worn position;
   - wearing a virtual copy of the spectacle frame carrying the at least one spectacle lens by an avatar of the wearer in the as-worn position, the avatar representing at least the forehead portion of the wearer.
Embodiment 16. A computer program for determining at least one centration parameter for aligning at least one spectacle lens in a spectacle frame to at last one eye of a wearer, the computer program comprising instructions which, when the program is executed by a computer, cause the computer to carry out the method according to any one of the preceding Embodiments.
Embodiment 17. A method for producing at least one spectacle lens, wherein the producing the at least one spectacle lens comprises processing at least one lens blank by using at least one centration parameter determined by the method for determining at least one centration parameter for aligning at least one spectacle lens in a spectacle frame to at last one eye of a wearer according to any one of the preceding method Embodiments.
Embodiment 18. A processing device for determining at least one centration parameter for aligning at least one spectacle lens in a spectacle frame to at least on eye of a wearer, the processing device being configured to:
   - generate a three-dimensional model related to the wearer comprising
      ∘ at least one spatial location of at least one reference point at the at least one eye of the wearer,
      ∘ at least one spatial direction vector specifying at least one line of sight of the at least one eye of the wearer, and
      ∘ a relationship between the at least one spatial location of at least one reference point at the at least one eye of the wearer and spatial locations of at least three characteristic defining features at the spectacle frame;
   - determine the at least one centration parameter by adjusting at least one lens design parameter of the at least one spectacle lens in the spectacle frame to the three-dimensional model related to the wearer; and
   - automatically modify the three-dimensional model related to the wearer to assume a habitual head posture of the wearer prior to determining the at least one centration parameter.
Embodiment 19. The processing device according to the preceding Embodiment, wherein the processing device is configured to automatically modify the three-dimensional model related to the wearer by analyzing the habitual head posture of the wearer from at least one of:
   - at least one image of at least a forehead portion of the wearer;
   - at least one three-dimensional scan of at least the forehead portion of the wearer.
Embodiment 20. The processing device according to any one of the preceding device Embodiments, wherein automatically modifying the three-dimensional model related to the wearer comprises adjusting an angular orientation of a head of the wearer in the three-dimensional model related to the wearer to a natural angular orientation of the head of the wearer determined from analyzing the habitual head posture of the wearer.
Embodiment 21. The processing device according to any one of the preceding device Embodiments, wherein the processing device is configured to generate the three-dimensional model related to the wearer by determining a comparative set of data comprising at least:
   - a set of parameters related to a deformation of the three-dimensional model related to the wearer with respect to the normal head;
   - a spatial location of the head of the wearer; and
   - angular orientation of the head of the wearer with respect to an orientation of the normal head.
Embodiment 22. The processing device according to the preceding Embodiment, wherein the angular orientation of the head of the wearer comprises at least one of:
   - a tilt angle;
   - a roll angle; and
   - a pan angle
   of the head of the wearer with respect to an orientation of the normal head.
Embodiment 23. A system for determining at least one centration parameter for aligning at least one spectacle lens in a spectacle frame to at least one eye of a wearer, wherein the system comprises:
   - at least one recording system configured to record at least one
      ∘ at least two images of at least a forehead portion of the wearer; or
      ∘ at least one three-dimensional scan of at least the forehead portion of the wearer;
   - at least one processing device according to any one of the preceding device Embodiments, wherein at least one of the at least one processing device is further configured to automatically modify the three-dimensional model related to the wearer to assume a habitual head posture of the wearer prior to determining the at least one centration parameter by adjusting at least one lens design parameter of the at least one spectacle lens in the spectacle frame to the three-dimensional model related to the wearer to a natural angular orientation of the head of the wearer determined from analyzing the habitual head posture of the wearer; and
   - at least one device for determining the natural angular orientation of the head of the wearer.
Embodiment 24. The system according to the preceding Embodiment, wherein the at least one device for determining a natural angular orientation of the head of the wearer is comprised by the at least one processing device.
Embodiment 25. The system according to any one of the two preceding Embodiments, wherein the at least one device for determining the natural angular orientation of the head of the wearer is selected from at least one of:
   - an inclination sensor comprised by or attached to the spectacle frame, wherein the inclination sensor is configured to measure an angle of inclination of the spectacle frame with respect to the spatial location of the head of the wearer;
   - a training system configured to adjust the natural angular orientation of the head of the wearer to the three-dimensional parametric model of the normal head;
   - a body tracking system configured to record at least one picture of at least the forehead portion of the wearer and to derive the natural angular orientation of the head of the wearer from the at least one picture;
   - an image analysis system configured to determine the natural angular orientation of the head of the wearer from at least one image of the wearer illustrating at least the forehead portion of the wearer, the at least one image of the wearer recorded in a natural habitus of the wearer.
Embodiment 26. The system according to any one of the preceding system Embodiments, further comprising:
   - at least one screen configured to display the three-dimensional model related to the wearer under the natural angular orientation of the head of the wearer.
Embodiment 27. The system according to any one of the preceding system Embodiments, wherein the image analysis system is further configured to select the at least one image of the wearer illustrating at least the forehead portion of the wearer recorded in the natural habitus of the wearer from a plurality of images in a file system.
Embodiment 28. The system according to the preceding Embodiment, wherein the file system is located on at least one of a data carrier or a remote location, the remote location being accessible via a network.
Embodiment 29. The system according to the preceding Embodiment, wherein the remote location is accessible via an in-house network or via internet.
Embodiment 30. The system according to any one of the preceding system Embodiments, wherein the at least one recording system is configured to record the at least two images of at least the forehead portion of the wearer or the three-dimensional scan of at least the forehead portion of the wearer when at least one of:
   - the spectacle frame is worn on the head of the wearer in an as-worn position;
   - a virtual copy of the spectacle frame carrying the at least one spectacle lens is worn by an avatar of the wearer in the as-worn position, wherein the avatar represents at least the forehead portion of the wearer.
Embodiment 31. The system according to any one of the preceding system Embodiments, wherein the system is distributed over at least two different locations.
Embodiment 32. The system according to the preceding Embodiment, wherein
   - at a first location are located:
      ∘ the at least one recording system,
      ∘ at least one portion of the at least one processing device configured to generate the three-dimensional model related to the wearer and to automatically modify the three-dimensional model related to the wearer to assume a habitual head posture of the wearer prior to determining the at least one centration parameter;
      ∘ the at least one device for determining a natural angular orientation of the head of the wearer; and
      ∘ at least one first communication interface, and
   - at a second location are located:
      ∘ at least one further portion of the at least one processing device configured to determine the at least one centration parameter by adjusting at least one lens design parameter of the at least one spectacle lens in the spectacle frame to the three-dimensional model related to the wearer; and
      ∘ at least one second communication interface,
      wherein the at least one first communication interface and the at least one second communication interface are configured to exchange pieces of information between the first location and the second location.
Embodiment 33. The system according to the preceding Embodiment, wherein the pieces of information comprise:
   - the angular orientation of the head of the wearer; and
   - the three-dimensional model related to the wearer assuming the habitual head posture.
Embodiment 34. The system according to any one of the two preceding Embodiments, wherein
   - at the second location is further located:
      ∘ at least one still further portion of the at least one processing device configured to initiate a process for producing the at least one spectacle lens using the at least one centration parameter.
Embodiment 35. The system according to the preceding Embodiment, wherein the system is further distributed over a third location,
   - wherein at the third location is located:
      ∘ a further screen configured to display the at least the forehead portion of the avatar of the wearer wearing the virtual copy of the spectacle frame in the as-worn position;
      ∘ a selection unit configured to provide a plurality of virtual copies of different types of the spectacle frame; and
      ∘ at least one third communication interface.
   - wherein the at least one third communication interface and the at least one second communication interface are configured to exchange further pieces of information between the third location and the second location.
Embodiment 36. The system according to the preceding Embodiment, wherein the further pieces of information comprise:
   - the angular orientation of the head of the wearer; and
   - data about the spectacle frame carrying the at least one spectacle lens worn by the avatar of the wearer in the as-worn position.

### Short description of the Figures

Further optional features and embodiments of the present invention are disclosed in more detail in the subsequent description of preferred embodiments, preferably in conjunction with the dependent claims. Therein, the respective optional features may be realized in an isolated fashion as well as in any arbitrary feasible combination, as the skilled person will realize. It is emphasized here that the scope of the invention is not restricted by the preferred embodiments.

In the Figures:
- Figure 1: schematically illustrates a preferred embodiment of a method for producing at least one spectacle lens comprising a computer-implemented method for determining at least one centration parameter;
- Figure 2: schematically illustrates a preferred embodiment of a system for determining at least one centration parameter; and
- Figure 3: schematically illustrates a further preferred embodiment of a method for producing at least one spectacle lens comprising a computer-implemented method for determining at least one centration parameter as performed in a distributed fashion over three different locations.

### Detailed description of the embodiments

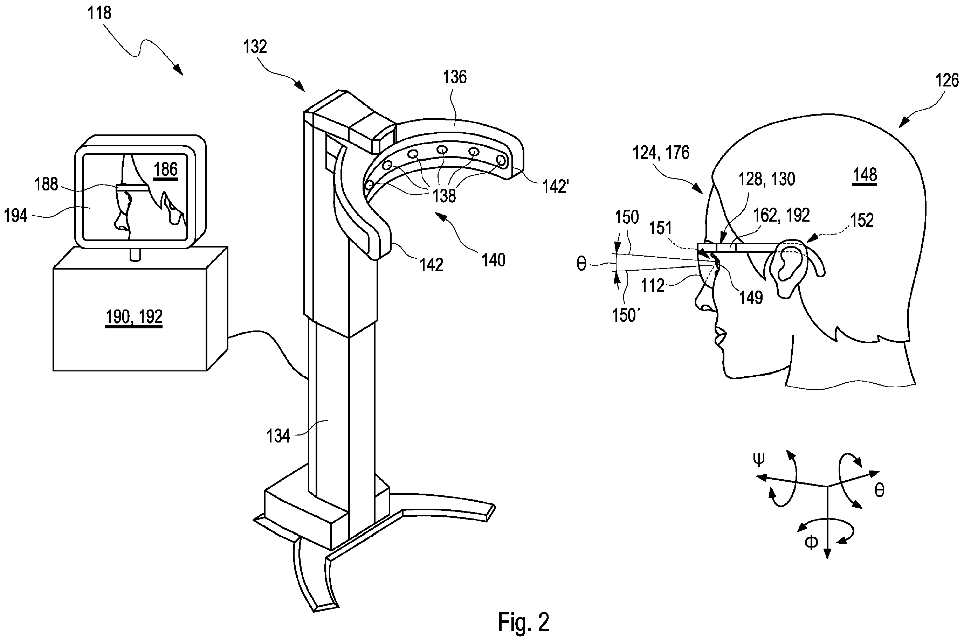

Figure 1 schematically illustrates a preferred embodiment of a method 110 for producing at least one spectacle lens 112 comprising a computer-implemented method 114 for determining at least one centration parameter 116 according to the present invention. A corresponding preferred embodiment of a system 118 for determining the at least one centration parameter 116 is schematically illustrated in Figure 2.

In a recording step 120, a plurality of three-dimensional scans 122 of a forehead portion 124 of a wearer 126 of a pair of spectacle lenses 112 in a spectacle frame 128 may be recorded in a situation in which the wearer 126 is wearing the spectacle frame 128 in an as-worn position 130 as depicted in Figure 2. For this purpose, a recording system 132 configured to record the plurality of the three-dimensional scans 122 of the forehead portion 124 of the wearer 126 wearing the spectacle frame 128 in the as-worn position 130, preferably a known recording system, such as a Zeiss VISUFIT 1000, may be used. As schematically illustrated there, the recording system 132 comprises a column 134 which supports a camera carrier 136 in a height-adjustable manner, which in turn supports a number of cameras 138. The camera carrier 136 encloses an inner space 140 between two ends 142, 142' in which the forehead portion 124 of the wearer 126 wearing the spectacle frame 128 in the as-worn position 130 is located when the corresponding three-dimensional scans 122 are recorded by using the cameras 138. For further details, reference may be made to EP 3 354 190 A1. However, a further kind of the recording system 132 may also be feasible.

Alternatively or in addition, at least two images of at least the forehead portion 124 of the wearer 126 may be recorded, wherein the at least two images may, preferably, be recorded under different angles with respect to an optical axis of a camera 138 as comprised by the at least one recording system 132. Herein, the angles under which the at least two images of at least the forehead portion 124 of the wearer 126 may be recorded may, preferably, differ from each other by a value of at least 1°, preferably of at least 5°, more preferred of at least 10°, however, a large value may be preferred.

In a generating step 144 according to step a), a three-dimensional model 146 related to the wearer 126, particularly related to the head 148 of the wearer 126, is generated. As illustrated in Figure 2, the three-dimensional model 146 related to the wearer 126 is based on a set of data comprising
- a spatial location of a reference point at each eye 149 of the wearer 126;
- a spatial direction vector specifying a line of sight 150 of each eye 149 of the wearer 126; and
- a relationship between the spatial location of the reference point at each eye 149 of the wearer 126 and spatial locations of three characteristic defining features at the spectacle frame 128.

Herein, the reference point at each eye 149 of the wearer 126 can, preferably, be a point representing a pupil center of each eye 149 of the wearer. Alternative or in addition, at least one further type of reference point, in particular a pupillary reflex, a corneal apex and/or a center of rotation of each eye 149, may also be feasible.

Further, the spatial direction vector specifies the line of sight 150 of each eye 149 of the wearer 126, specifically the line of sight 150 of each eye 149 in a primary direction, in which the view of the wearer 126 is directed to a defined point at a large distance, for which purpose a fixation target can be used, as determined during the recording step 120. As schematically illustrated in Figure 2, the wearer 126, typically, does not adopt a natural habitus, i.e. a natural habitual head posture 156, during the recording step 120. Rather, the actual habitus as assumed by the wearer 126 can be due to an unfamiliar situation during the recording step 120 and/or psychological stress.

Further, the three-dimensional model 146 related to the wearer 126 comprises the relationship between the spatial location of the reference point at each eye 149 of the wearer 126 and the spatial locations of three characteristic defining features at the spectacle frame 128. As depicted in Figure 2, the three characteristic defining features are located at the spectacle frame 128 in a fashion that they specify the spatial location of the spectacle frame 128 with respect to each eye 149 of the wearer 126. Herein, the three characteristic defining features at the spectacle frame 128 can, preferably, comprise a first placement area 151 at which the spectacle frame 128 touches a portion of the nose of the wearer 126 and two second placement areas 152 at which the spectacle frame 128 touches a portion of each ear of the wearer 126, in particular, since the placement areas 151, 152 indicate the spatial locations at which the spectacle frame 128 is removably attached to the head 148 of the wearer 126.

In a preferred embodiment of the present invention as depicted here, the representation of the forehead portion 124 of the wearer 126 may be based on a three-dimensional parametric model 153 of a normal head. In particular, generating the three-dimensional model 146 related to the wearer 126 may, preferably, comprise determining a comparative set of data comprising at least
- a set of parameters related to a deformation of the three-dimensional model 146 related to the wearer 126 with respect to the normal head;
- a spatial location of the head 148 of the wearer 126 which may, preferably, be represented by indicated by a first triple *(x, y, z)* in Cartesian coordinates; and
- an angular orientation of the head 148 of the wearer 126 with respect to an orientation of the normal head, wherein the angular orientation of the head 148 of the wearer 126 can, preferably be represented by a second triple *(θ, ψ, ϕ)* comprising
   ∘ a tilt angle *θ*;
   ∘ a roll angle *ψ*; and
   ∘ a pan angle *ϕ*
   of the head 148 of the wearer 126 with respect to an orientation of the normal head. As defined above, the tilt angle *θ* indicates a rotation of the head 148 of the wearer 126 around a lateral axis of the head 148 of the wearer 126; the roll angle *ψ* indicates a rotation of the head 148 of the wearer 126 around a medial axis of the head 148 of the wearer 126; and the pan angle *ϕ* indicates a rotation of the head 148 of the wearer 126 around an axial axis of the head 148 of the wearer 126.

In a modifying step 154 according to step c), the three-dimensional model 146 related to the wearer 126 is automatically modified to assume a habitual head posture 156 of the wearer 126 before performing a determining step 158 according to step b) for determining the at least one centration parameter 116. Preferably, automatically modifying the three-dimensional model 146 related to the wearer 126 to assume the habitual head posture 156 of the wearer 126 may comprise analyzing the habitual head posture 156 of the wearer 126 and adjusting the angular orientation of the head 148 of the wearer 126 in the three-dimensional model 146 related to the wearer 126 to a natural angular orientation of the head 148 of the wearer 126 which has been determined from analyzing the habitual head posture 156 of the wearer 126 in an analyzing step 160.

In the analyzing step 160, analyzing the habitual head posture 156 of the wearer 126 may, in particular, comprise determining the natural angular orientation of the head 148 of the wearer 126 by applying at least one of:
- a measuring sub-step 161, which comprises determining an angle of inclination of the spectacle frame 128 with respect to the spatial location of the head 148 of the wearer 126, in particular by using an inclination sensor 162 that may, preferably, be comprised by or attached to the spectacle frame 128;
- a training sub-step 164, which comprises adjusting the natural angular orientation of the head 148 of the wearer 126 to the three-dimensional parametric model 153 of the normal head using data obtained from a training process 166;
- a deriving sub-step 168, which recording at least one parameter related to the forehead portion 124 of the wearer 126 using a body tracking system 170 and deriving the natural angular orientation of the head 148 of the wearer 126 from the at least one parameter;
- an image processing step 172, which comprises determining the natural angular orientation of the head 148 of the wearer 126 from a plurality of images 174 of the wearer 126, wherein each image 174 of the wearer 126 illustrates at least the forehead portion 124 of the wearer 126, and wherein each image 174 of the wearer 126 has been recorded in a natural habitus of the wearer 126. Preferably, each image 174 of the wearer 126 illustrates the wearer 126 wearing the spectacle frame 128 in the as-worn position 130. Preferably, each image 174 of the wearer 126 illustrates a side view 176 of the forehead portion 124 of the wearer 126. In particular, the image processing step 172 may comprise selecting at least one image which illustrates the forehead portion 124 of the wearer 126 being recorded in the natural habitus of the wearer 126 from the plurality of the images 174 of the wearer 126 which are in a file system 178. Herein the file system 178 may be located on a data carrier 180 and/or at a remote location 182 that may be accessible via a network 184, such as an in-house network or via internet.

In particular, analyzing the habitual head posture 156 of the wearer 126 may comprise a weighing sub-step (not depicted here), which may comprise weighing at least one component of the angular orientation of the head 148 of the wearer 126 in at least one coordinate system. As described above in more detail, a set of weight factors *(w₁, w₂, w₃)* may be used for modifying the second triple *(θ, ψ, ϕ)* representing the angular orientation in a fashion, whereby a modified second triple *(*w₁*θ*, w₂*ψ,* w₃*ϕ)* may be obtained. However, a further manner of applying at least one weighing factor may also be conceivable.

As a result of automatically modifying the three-dimensional model 146 related to the wearer 126, a modified spatial direction vector now specifies a modified line of sight 150' of each eye 149 of the wearer 126, specifically the modified line of sight 150' of each eye 149 in the primary direction. In the preferred embodiment as depicted in Figure 2, the modified line of sight 150' of each eye 149 of the wearer 126 differs from the line of sight 150 of each eye 149 of the wearer 126 as determined during the recording step 120 by the tilt angle *θ* which indicates the rotation of the head 148 of the wearer 126 around a lateral axis of the head 148 of the wearer 126 when adjusting the head 148 of the wearer to the natural habitual head 156 posture. However, the roll angle *ψ* and/or the pan angle *ϕ* may, alternatively or in addition, be affected by automatically modifying the three-dimensional model 146 related to the wearer 126 (not depicted here). Consequently, the three-dimensional model 146 related to the wearer 126 now assumes the natural habitual head 156 posture of the head 148 of the wearer 126. In this fashion, it can be ensured that the habitual head posture 156 of the head 148 of the wearer 126 is actually used when performing the determining step 158.

In the determining step 158 according to step c), the at least one centration parameter 116 for aligning the at least one spectacle lens 112 in the spectacle frame 128 to the head 148 of the wearer 126 is determined by adjusting at least one lens design parameter of the at least one spectacle lens 112 in the spectacle frame 128 to the three-dimensional model 146 related to the wearer 126, wherein the three-dimensional model 146 related to the wearer 126 has, in particular accordance with the present invention, been automatically modified to assume the habitual head posture 156 of the wearer 126 during the modifying step 154 before performing the determining step 158.

As illustrated in Figure 2, determining the at least one centration parameter 116 may, preferably, comprise wearing the spectacle frame 128 on the head 148 of the wearer 126 in an as-worn position 130. In a particularly preferred embodiment of the present invention, determining the at least one centration parameter 116 may, alternatively or in addition, comprise that an avatar 186 of the wearer 126 may wear a virtual copy 188 of the spectacle frame 128 carrying the at least one spectacle lens 112 in the as-worn position 130, wherein, as depicted here, the avatar 186 may, preferably, represent at least the forehead portion 124 of the wearer 126.

As further illustrated in Figure 2, the system 118 for determining the at least one centration parameter 116 comprises the recording system 132 configured to record the plurality of the three-dimensional scans 122 of the forehead portion 124 of the wearer 126, a processing device 190 configured to analyze the habitual head posture 156 of the wearer 126 by determining a natural angular orientation of the head 148 of the wearer 126 with respect to an orientation of the normal head; and at least one device 192 for determining the natural angular orientation of the head 148 of the wearer 126. Alternatively or in addition, the at least two images of at least the forehead portion 124 of the wearer 126 being recorded under different angles with respect to the optical axis of the camera 138 as comprised by the at least one recording system 132, may also be used for this purpose.

In particular, determining the at least one centration parameter 116 may comprises displaying the three-dimensional model 146 related to the wearer 126 as automatically modified to assume the habitual head posture 156 of the wearer 126 under the natural angular orientation of the head 148 of the wearer 126 on a screen 194. The screen 194 may, further, be used for displaying the avatar 186 as schematically illustrated in Figure 2.

Further, the method 114 for determining the at least one centration parameter 116 may, preferably, comprise an initiating step 196, by which a producing step 198 designated for producing the at least one spectacle lens 112 may be initiated.

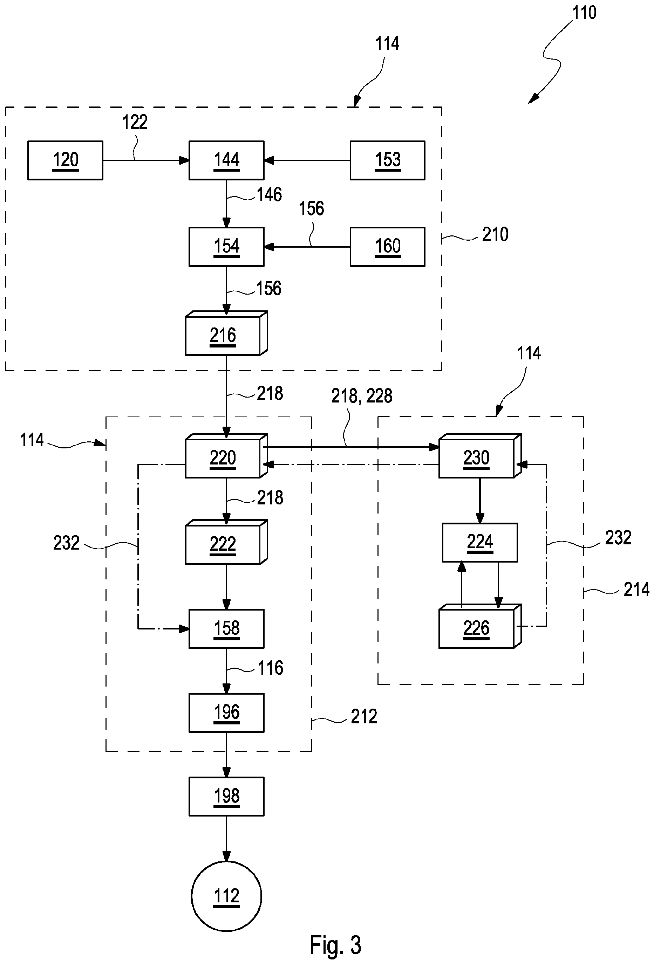

Figure 3 schematically illustrates a further preferred embodiment of the method 110 for producing the at least one spectacle lens 112 comprising the computer-implemented method 114 for determining the at least one centration parameter 116, wherein the method 114 for determining the at least one centration parameter 116 is performed here in a distributed fashion over three different locations 210, 212, 214. Herein the first location 210 may, in particular, be placed at a site, such as of shop, of the optician, while the second location 212 may, in particular, be placed at a remote location, such as a server or a cloud platform, whereas the third location 214 may, in particular, be placed at a site of the wearer 126, such at a home computer of the wearer 126.

The recording system 132, preferably, may be situated in the first location 210. As described above, the recording system 132 is configured to perform the recording step 120 which comprises recording the plurality of the three-dimensional scans 122 of the forehead portion 124 of the wearer 126 in the situation in which the wearer 126 is wearing the spectacle frame 128 in the as-worn position 130 as depicted in Figure 2. Alternatively or in addition, the recording step 120 may comprise recording the at least two images of at least the forehead portion 124 of the wearer 126 under different angles with respect to the optical axis of the camera 138 as comprised by the at least one recording system 132.

A first portion of the processing device 190 may, further, be situated in the first location 210, wherein the first portion of the processing device 190 may be configured to perform the generating step 144 which comprises generating the three-dimensional model 146 related to the wearer 126 by adapting the plurality of the three-dimensional scans 122 of the forehead portion 124 of the wearer 126 to the three-dimensional parametric model 153 of the normal head. In addition, the further portion of the processing device 190 may, in particular, be configured to perform the modifying step 154 which comprises automatically modifying the three-dimensional model 146 related to the wearer 126 to assume the habitual head posture 156 of the wearer 126. As described above in connection with Figures 1 and 2 in more detail, automatically modifying the three-dimensional model 146 related to the wearer 126 to assume the habitual head posture 156 of the wearer 126 may, preferably, comprise an analyzing step 160 and adjusting the angular orientation of the head 148 of the wearer 126 in the three-dimensional model 146 related to the wearer 126 to the natural angular orientation of the head 148 of the wearer 126 as determined in the analyzing step 160. For further details with regard to the analyzing step 160, reference can be made to the description of Figure 1 above. Further, the at least one device 192 for determining the natural angular orientation of the head 148 of the wearer 126 may, also, be situated at the first location 210.

A first communication interface 216 may, further be situated in the first location 210, wherein the first communication interface 216 may, especially, be configured to exchange pieces of information 218 with a second communication interface 220 as situated in the second location 212. In particular, the pieces of information 218 may comprise the natural angular orientation of the head 148 of the wearer 126 as determined in the analyzing step 160 and the three-dimensional model 146 related to the wearer 126 assuming the habitual head posture 156 of the wearer 126. Herein, the pieces of information 218 may, preferably, be provided by the further portion of the processing device 190 via the first communication interface 216 and via the second communication interface 220 to a remote platform 222 being configured for this purpose and situated at the second location 212. However, an exchange of further pieces of information between the first communication interface 218 and the second communication interface 220 may also be conceivable.

A further portion of the processing device 190 may, further, be situated in the second location 212, wherein the further portion of the processing device 190 may be configured to determine the at least one centration parameter 116 by adjusting the at least one lens design parameter of the at least one spectacle lens 112 in the spectacle frame 128 to the three-dimensional model 146 related to the wearer 148 which has been modified to assume the habitual head posture 156 of the wearer 126 by the first portion of the processing device 190 as situated in the first location 210. As a result of such a distribution of the processing device 190 between the first location 210 and the second location 212, it becomes possible to determine the at least one centration parameter 116 in a separate fashion at any location which may have access to the remote location, such as the server or the cloud platform, which may constitute the second location 212.

Further, a still further portion of the processing device 190 may be located at the second location 212. Herein, the still further portion of the processing device 190 may, in particular, be configured to initiate the producing step 198, which is designated for producing the at least one spectacle lens 112 by using the at least one centration parameter 116 as well-known to the person skilled in the art.

As further illustrated in Figure 3, the further preferred embodiment of the computer-implemented method 114 for determining the at least one centration parameter 116 can be further distributed over the third location 214. As illustrated there, the wearer 126 may, in addition, perform a selecting step 224, which may comprise selecting a spectacle frame 128 that may be displayed on a further screen (not depicted here), which may be configured to display the at least the forehead portion 124 of the avatar 186 of the wearer 126 wearing the virtual copy 188 of the spectacle frame 128 in the as-worn position 130. Further, selection unit 226 configured to provide a plurality of virtual copies 188 of different types of the spectacle frame 128 may support the wearer when performing the selecting step 224. In order to exchange the pieces of information 218 or further pieces of information 228 with the second communication interface 220, a third communication interface 230 may be situated at the third location 214. However, an exchange of still further pieces of information between the second communication interface 220 and the third communication interface 230 may also be conceivable.

In addition, the selection unit 226 may communicate with the further portion of the processing device 190 configured to perform the determining step 158 in order to determine the at least one centration parameter 116 via the third communication interface 230 and the second communication interface 220 as indicated by reference sign 232 denoting a communication path. In this fashion, it becomes possible to provide information regarding the selected spectacle frame 128 which may be used as one of the centration parameter 116 in a direct manner to the involved process and device without bothering the wearer 126 and the optician with such details.

Consequently, the preferred embodiment of the computer-implemented method 114 as illustrated in Figure 3 which is performed in a distributed fashion over the three different locations 210, 212, 214 offers a virtual selection, fitting, centration and initiating of the producing step 198 of the at least one spectacle lens 112 even after the wearer 126 may have already left the location, such as the shop, of the optician.

### List of Reference Signs

- 110: method for producing at least one spectacle lens
- 112: spectacle lens
- 114: computer-implemented method for determining at least one centration parameter
- 116: centration parameter
- 118: system
- 120: recording step
- 122: three-dimensional scan
- 124: forehead portion
- 126: wearer
- 128: spectacle frame
- 130: as-worn position
- 132: recording system
- 134: column
- 136: camera carrier
- 138: camera
- 140: inner space
- 142, 142': end
- 144: generating step
- 146: three-dimensional model of the head of a wearer
- 148: head
- 149: eye
- 150, 150': line of sight
- 151: first placement area
- 152: second placement area
- 153: three-dimensional parametric model
- 154: modifying step
- 156: habitual head posture
- 158: determining step
- 160: analyzing step
- 161: measuring sub-step
- 162: inclination sensor
- 164: training sub-step
- 166: training process
- 168: deriving sub-step
- 170: body tracking system
- 172: image processing
- 174: image
- 176: side view
- 178: file system
- 180: data carrier
- 182: remote location
- 184: network
- 186: avatar
- 188: virtual copy of the spectacle frame
- 190: processing device
- 192: device for determining a natural angular orientation of the head of the wearer
- 194: screen
- 196: initiating step
- 198: producing step
- 210: first location
- 212: second location
- 214: third location
- 216: first communication interface
- 218: piece of information
- 220: second communication interface
- 222: remote platform
- 224: selecting step
- 226: selection unit
- 228: further piece of information
- 230: third communication interface
- 232: communication path

## Claims

1. A computer-implemented method (114) for determining at least one centration parameter (116) for aligning at least one spectacle lens (112) in a spectacle frame (128) to at least one eye (149) of a wearer (126), the method (114) comprising the following steps:
a) generating a three-dimensional model (146) related to the wearer (126) comprising
- at least one spatial location of at least one reference point at the at least one eye (149) of the wearer (126),
- at least one spatial direction vector specifying at least one line of sight (150) of the at least one eye (149) of the wearer (126), and
- a relationship between the at least one spatial location of at least one reference point at the at least one eye (149) of the wearer (126) and spatial locations of at least three characteristic defining features at the spectacle frame (128); and
b) determining the at least one centration parameter (116) by adjusting at least one lens design parameter of the at least one spectacle lens (112) in the spectacle frame (128) to the three-dimensional model (146) related to the wearer (126);
**characterized by**
c) automatically modifying the three-dimensional model (146) related to the wearer (126) to assume a habitual head posture (156) of the wearer (126) prior to determining the at least one centration parameter (116).

2. The method (114) according to the preceding claim, wherein automatically modifying the three-dimensional model (146) related to the wearer (126) comprises analyzing the habitual head posture (156) of the wearer (126) from at least one of
- at least one image of at least a forehead portion (124) of the wearer (126);
- at least one three-dimensional scan (122) of at least the forehead portion (124) of the wearer (126).

3. The method (114) according to any one of the preceding claims, wherein automatically modifying the three-dimensional model (146) related to the wearer (126) comprises adjusting an angular orientation of a head (148) of the wearer (126) in the three-dimensional model (146) related to the wearer (126) to a natural angular orientation of the head (148) of the wearer (126) determined from analyzing the habitual head posture (156) of the wearer (126).

4. The method (114) according to any one of the two preceding claims, wherein analyzing the habitual head posture (156) of the wearer (126) comprises determining the natural angular orientation of the head (148) of the wearer (126) by at least one of
- measuring an angle of inclination of the spectacle frame (128) with respect to the spatial location of the head (148) of the wearer (126) using an inclination sensor (162) comprised by or attached to the spectacle frame (128);
- adjusting the natural angular orientation of the head (148) of the wearer (126) to a three-dimensional parametric model (153) of a normal head using data obtained from a training process (166);
- recording at least one parameter related to at least the forehead portion (124) of the wearer (126) using a body tracking system (170) and deriving the natural angular orientation of the head (148) of the wearer (126) from the at least one parameter;
- determining the natural angular orientation of the head (148) of the wearer (126) from at least one image (174) of the wearer (126) illustrating at least the forehead portion (124) of the wearer (126), the at least one image (174) of the wearer (126) recorded in a natural habitus of the wearer (126).

5. The method (114) according to the preceding claim, wherein the at least one image (174) of the wearer (126) illustrates the wearer (126) wearing a spectacle frame (128) in an as-worn position (130).

6. The method (114) according to any one of the two preceding claims, wherein the at least one image (174) of the wearer (126) illustrates a side view (176) of at least the forehead portion (124) of the wearer (164).

7. The method (114) according to any one of the three preceding claims, wherein determining the natural angular orientation of the head (148) of the wearer (126) from at least one image (174) of the wearer (126) comprises selecting the at least one image (174) of the wearer (126) illustrating at least the forehead portion (124) of the wearer (126) recorded in the natural habitus of the wearer (126) from a plurality of images (174) in a file system (178), wherein the file system (178) is located at least one of on a data carrier (180) or at a remote location (182), the remote location (182) being accessible via a network (184).

8. The method (114) according to any one of the preceding claims, wherein generating the three-dimensional model (146) related to the wearer (126) comprises recording and adapting at least one of
- at least two images of at least a forehead portion (124) of the wearer (126);
- the at least one three-dimensional scan (122) of at least the forehead portion (124) of the wearer (126)
to a three-dimensional parametric model (153) of a normal head.

9. The method (114) according to any one of the preceding claims, wherein generating the three-dimensional model (146) comprises determining a comparative set of data comprising at least
- a set of parameters related to a deformation of the three-dimensional model (146) related to the wearer (126) with respect to the normal head;
- a spatial location of the head (148) of the wearer (126); and
- an angular orientation of the head (148) of the wearer (126) with respect to an orientation of the normal head, wherein the angular orientation of the head (14) of the wearer (126) comprises at least one of
∘ a tilt angle (*θ*);
∘ a roll angle (*ψ*); and
∘ a pan angle (*ϕ*)
of the head (148) of the wearer (126) with respect to an orientation of the normal head.

10. The method (114) according to any one of the preceding claims, wherein determining the at least one centration parameter (116) comprises at least one of
- wearing the spectacle frame (128) on the head (148) of the wearer (126) in an as-worn position (128);
- wearing a virtual copy (188) of the spectacle frame (128) carrying the at least one spectacle lens (112) by an avatar (186) of the wearer (126) in the as-worn position (130), the avatar (186) representing at least the forehead portion (124) of the wearer (126).

11. A computer program for determining at least one centration parameter (116) for aligning at least one spectacle lens (112) in a spectacle frame (128) to at least one eye (149) of a wearer (126), the computer program comprising instructions which, when the program is executed by a computer, cause the computer to carry out a method (114) for determining at least one centration parameter (116) for aligning at least one spectacle lens (112) in a spectacle frame (128) to at least one eye (149) of a wearer (126), the method (114) comprising the following steps:
a) generating a three-dimensional model (146) related to the wearer (126) comprising
- at least one spatial location of at least one reference point at the at least one eye (149) of the wearer (126),
- at least one spatial direction vector specifying at least one line of sight (150) of the at least one eye (149) of the wearer (126), and
- a relationship between the at least one spatial location of at least one reference point at the at least one eye (149) of the wearer (126) and spatial locations of at least three characteristic defining features at the spectacle frame (128); and
b) determining the at least one centration parameter (116) by adjusting at least one lens design parameter of the at least one spectacle lens (112) in the spectacle frame (128) to the three-dimensional model (146) related to the wearer (126);
**characterized by**
c) automatically modifying the three-dimensional model (146) related to the wearer (126) to assume a habitual head posture (156) of the wearer (126) prior to determining the at least one centration parameter (116).

12. A method (110) for producing at least one spectacle lens (112), wherein producing the at least one spectacle lens (112) comprises processing at least one lens blank by using at least one centration parameter (116) determined by a method (114) for determining at least one centration parameter (116) for aligning at least one spectacle lens (112) in a spectacle frame (128) to at least one eye (149) of a wearer (126), the method (114) comprising the following steps:
a) generating a three-dimensional model (146) related to the wearer (126) comprising
- at least one spatial location of at least one reference point at the at least one eye (149) of the wearer (126),
- at least one spatial direction vector specifying at least one line of sight (150) of the at least one eye (149) of the wearer (126), and
- a relationship between the at least one spatial location of at least one reference point at the at least one eye (149) of the wearer (126) and spatial locations of at least three characteristic defining features at the spectacle frame (128); and
b) determining the at least one centration parameter (116) by adjusting at least one lens design parameter of the at least one spectacle lens (112) in the spectacle frame (128) to the three-dimensional model (146) related to the wearer (126);
**characterized by**
c) automatically modifying the three-dimensional model (146) related to the wearer (126) to assume a habitual head posture (156) of the wearer (126) prior to determining the at least one centration parameter (116).

13. A processing device (190) for determining at least one centration parameter (116) for aligning at least one spectacle lens (112) in a spectacle frame (128) to at least one eye (149) of a wearer (126), the processing device (190) being configured to
- generate a three-dimensional model (146) related to the wearer (126) comprising
∘ at least one spatial location of at least one reference point at the at least one eye (149) of the wearer (126),
∘ at least one spatial direction vector specifying at least one line of sight (150) of the at least one eye (149) of the wearer (126), and
∘ a relationship between the at least one spatial location of at least one reference point at the at least one eye (149) of the wearer (126) and spatial locations of at least three characteristic defining features at the spectacle frame (128); and
- determine the at least one centration parameter (116) by adjusting at least one lens design parameter of the at least one spectacle lens (112) in the spectacle frame (128) to the three-dimensional model (146) related to the wearer (126),
**characterized in**
**that** the processing device (190) is further configured to
- automatically modify the three-dimensional model (146) related to the wearer (126) to assume a habitual head posture (156) of the wearer (126) prior to determining the at least one centration parameter (116).

14. A system (118) for determining at least one centration parameter (116) for aligning at least one spectacle lens (112) in a spectacle frame (128) to at least one eye (149) of a wearer (126), the system (118) comprising
- at least one recording system (132) configured to record at least one of
∘ at least two images of at least a forehead portion (124) of the wearer (126);
∘ at least one three-dimensional scan (122) of at least the forehead portion (124) of the wearer (126); and
- at least one processing device (190) being configured to
∘ generate a three-dimensional model (146) related to the wearer (126) comprising
▪ at least one spatial location of at least one reference point at the at least one eye (149) of the wearer (126),
▪ at least one spatial direction vector specifying at least one line of sight (150) of the at least one eye (149) of the wearer (126), and
▪ a relationship between the at least one spatial location of at least one reference point at the at least one eye (149) of the wearer (126) and spatial locations of at least three characteristic defining features at the spectacle frame (128); and
∘ determine the at least one centration parameter (116) by adjusting at least one lens design parameter of the at least one spectacle lens (112) in the spectacle frame (128) to the three-dimensional model (146) related to the wearer (126),
**characterized in**
**that** the system (118) further comprises
- at least one device (192) for determining a natural angular orientation of the head (148) of the wearer (126); and
**that** the at least one processing device (190) is further configured to
∘ automatically modify the three-dimensional model (146) related to the wearer (126) to assume a habitual head posture (156) of the wearer (126) prior to determining the at least one centration parameter (116) by adjusting at least one lens design parameter of the at least one spectacle lens (112) in the spectacle frame (128) to the three-dimensional model (146) related to the wearer (126) to a natural angular orientation of the head (148) of the wearer (126) determined from analyzing the habitual head posture (156) of the wearer (126).

15. The system (118) according to the preceding claim, wherein the at least one device (192) for determining the natural angular orientation of the head (148) of the wearer (126) is selected from at least one of
- an inclination sensor (162) comprised by or attached to the spectacle frame (128), wherein the inclination sensor (162) is configured to measure an angle of inclination of the spectacle frame (128) with respect to the spatial location of the head (148) of the wearer (126);
- a training system (166) configured to adjust the natural angular orientation of the head (148) of the wearer (126) to the three-dimensional parametric model (153) of the normal head;
- a body tracking system (170) configured to record at least one picture of at least the forehead portion (124) of the wearer (126) and to derive the natural angular orientation (126) of the head (148) of the wearer (126) from the at least one picture; or
- an image analysis system configured to determine the natural angular orientation of the head (148) of the wearer (126) from at least one image (174) of the wearer (126) illustrating at least the forehead portion (124) of the wearer (126), the at least one image (174) of the wearer (164) being recorded in a natural habitus of the wearer (126).
